# EUROPEAN PATENT SPECIFICATION

(11) **EP 4 643 481 B1**
(45) Date of publication and mention of the grant of the patent: **25.11.2026**
(21) Application number: 23922137.7
(22) Date of filing: 04.04.2023
(51) Int. Cl.: H04L 1/1812, H04L 1/1822, H04L 1/1829, H04L 1/1867, H04W 72/12

(54) **WIRELESS COMMUNICAION METHOD AND DEVICE THEREOF**
DRAHTLOSKOMMUNIKATIONSVERFAHREN UND VORRICHTUNG DAFÜR
PROCÉDÉ DE COMMUNICATION SANS FIL ET DISPOSITIF ASSOCIÉ

(43) Date of publication of application: 05.11.2025
(73) Proprietor: ZTE Corporation, Shenzhen, Guangdong 518057 (CN)
(72) Inventor: XU, Jiajun, Shenzhen, Guangdong 518057 (CN); CHEN, Mengzhu, Shenzhen, Guangdong 518057 (CN); MA, Xiaoying, Shenzhen, Guangdong 518057 (CN); DAI, Jianqiang, Shenzhen, Guangdong 518057 (CN); XU, Jun, Shenzhen, Guangdong 518057 (CN); DAI, Bo, Shenzhen, Guangdong 518057 (CN); TANG, Hong, Shenzhen, Guangdong 518057 (CN)
(74) Representative: Deambrogi, Edgardo
(86) International application number: PCT/CN2023/086235
(87) International publication number: WO 2024/169008

(56) References cited:
- WO-A1-2021/092767
- WO-A1-2022/031102
- WO-A1-2022/134046
- WO-A1-2022/245025
- CN-A- 114 375 602
- CN-A- 115 669 146
- US-A1- 2023 309 090
- YAN CHENG ET AL: "Discussion on CG enhancements for XR capacity", vol. RAN WG1, no. Athens, GR; 20230227 - 20230303, 17 February 2023 (2023-02-17), XP052247276, Retrieved from the Internet <URL:https://www.3gpp.org/ftp/TSG_RAN/WG1_RL1/TSGR1_112/Docs/R1-2300123.zip R1-2300123.docx> [retrieved on 20230217]

## Description

### TECHNICAL FIELD

This document is directed generally to wireless communications, and in particular to 5G communications.

### BACKGROUND

In beyond 5G and 6G communication, one of promising services is characterized by quasi-periodicity (jitter impact), large and various data amount and stringent latency requirement, including e.g., extended reality (XR) service. In the prior art, configured grant (CG) is capable of conveying periodic data by preconfigured resource without time consuming grant request. In order to address the characteristic of large and variable packet size, multiple CG physical uplink shared channel (PUSCH) occasions in a period is considered for transmission. Owing to the service characteristic of large and various data amount, the preconfigured resources are likely to be over-configured, which cause resource waste and therefore low resource efficiency. To this end, uplink control information is considered for resource release/recycling, to enhance the resource efficiency. However, HARQ (hybrid automatic retransmission request) process identifiers (IDs) for the released/recycled resources are still occupied, which causes HARQ process identifier waste. Patent document WO 2022/031102 A1 and non-patent document R1-2300123 provide related technical solutions; however, the above mentioned problem still remains unsolved. In particular, WO 2022/031102 A1 discloses a UE that can receive a UL grant setting for a set of UL grants. The UE determines hybrid automatic repeat request process identifiers for cycles of the set of UL grants on the basis of the UL grant setting, and can perform UL channel transmission in at least one of transmission periods corresponding to the set of UL grants within the cycles on the basis of the determined hybrid automatic repeat request process identifiers. Determining the hybrid automatic repeat request process identifiers for the cycles can include determining start hybrid automatic repeat request process identifiers of the hybrid automatic repeat request process identifiers on the basis of hybrid automatic repeat request process identifier intervals. The hybrid automatic repeat request process identifier intervals are the minimum differences among the start hybrid automatic repeat request process identifiers for different cycles. YAN CHENG ET AL: "Discussion on CG enhancements for XR capacity", 3GPP DRAFT R1-2300123 of February 17, 2023 provides some views on CG enhancement techniques, including multiple CG PUSCH transmission occasions in a period of a single CG PUSCH configuration and dynamic indication of unused CG PUSCH occasion(s) based on UCI communicated by the UE.

### SUMMARY

The present disclosure relates to methods, systems, and devices for CG communications, and in particular to methods, systems, and devices for determining the HARQ process IDs for CG occasions.

The present disclosure relates to a wireless communication method for use in a wireless terminal according to claim 1.

The present disclosure relates to a wireless communication method for use in a wireless network node according to claim 12.

The present disclosure relates to a wireless terminal according to claim 13.

The present disclosure relates to a wireless network node according to claim 14.

The present disclosure relates to a computer program product according to claim 15.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The invention is specified by the independent claims. Preferred embodiments are defined in the dependent claims. In the following description, although numerous features may be designated as optional, it is nevertheless acknowledged that all features comprised in the independent claims are not to be read as optional.

The above and other aspects and their implementations are described in greater detail in the drawings, the descriptions, and the claims.

### BRIEF DESCRIPTION OF THE DRAWINGS

FIG. 1 shows a schematic diagram of a configured grant transmission according to an embodiment of the present disclosure.
FIG. 2 shows a schematic diagram of a configured grant transmission according to an embodiment of the present disclosure.
FIG. 3 shows a schematic diagram of a configured grant transmission according to an embodiment of the present disclosure.
FIG. 4 shows a schematic diagram of a configured grant transmission according to an embodiment of the present disclosure.
FIG. 5 shows a schematic diagram of a configured grant transmission according to an embodiment of the present disclosure.
FIG. 6 shows a schematic diagram of a configured grant transmission according to an embodiment of the present disclosure.
FIG. 7 shows a schematic diagram of a configured grant transmission according to an embodiment of the present disclosure.
FIG. 8 shows a schematic diagram of a configured grant transmission according to an embodiment of the present disclosure.
FIG. 9 shows a schematic diagram of a network architecture according to an embodiment of the present disclosure.
FIG. 10 shows an example of a schematic diagram of a wireless terminal according to an embodiment of the present disclosure.
FIG. 11 shows an example of a schematic diagram of a wireless network node according to an embodiment of the present disclosure.

### DETAILED DESCRIPTION

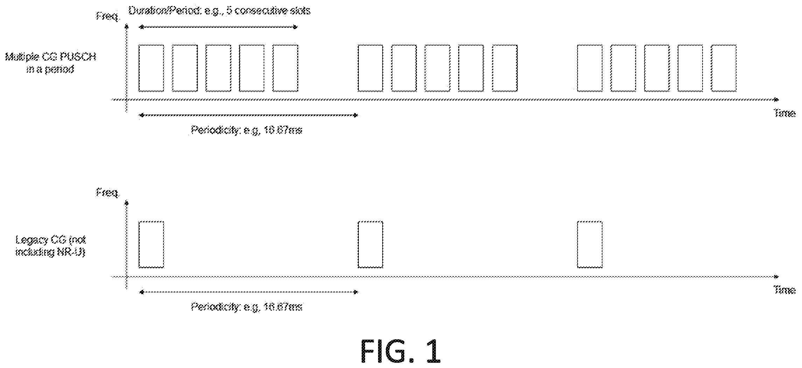

FIG. 1 shows a schematic diagram of a configured grant transmission according to an embodiment of the present disclosure. As shown in FIG. 1, there may be multiple CG PUSCH occasions in a CG period. That is there are more than one CG PUSCH in a period compared to legacy CG configuration where only one CG PUSCH is in single period.

In an embodiment, once the CG is activated, the BS (e.g., gNB) would allocate the CG PUSCHs to the UE according to configured parameters (e.g., RRC parameters) and scheduling parameters (e.g., time domain allocation, frequency domain allocation, MCS level and etc.) in activation signaling (RRC or DCI).

In an embodiment, a procedure for configuring a CG can be divided briefly as the following:
Step 0: Parameter configuration
Step 1: Transmission occasion determination
Step 2: HARQ (Hybrid Automatic Repeat Request) Process ID determination
Step 3: Resource configuration

In the above procedure, Step 1 and Step 2 are determined by configured parameters, while Step 3 is determined by scheduling parameters.

Regarding the transmission occasions determination, all available transmission occasions are numbered and their symbol/slot location can be derived by:

### Type 1 CG (RRC activation)

After an uplink grant is configured for a configured grant Type 1, the MAC entity shall consider sequentially that the Nth (N >= 0) uplink grant occurs in the symbol for which: $\begin{matrix}\left[\left(SFN\times numberOfSlotsPerFrame\times numberOfSymbolsPerSlot\right)+\left(\begin{matrix}slot number in the \\ frame \times numberOfSymbolsPerSlot\end{matrix}\right)+symbol number in the slot\right] = \\ \left(\begin{matrix}timeReferenceSFN \times numberOfSlotsPerFrame \times numberOfSymbolsPerSlot + \\ timeDomainOffset \times numberOfSymbolsPerSlot + S + N \times periodicity\end{matrix}\right) modulo \left(\begin{matrix}1024 \times \\ numberOfSlotsPerFrame \times numberOfSymbolsPerSlot\end{matrix}\right)\end{matrix}$

### Type 2 CG (DCI activation)

After an uplink grant is configured for a configured grant Type 2, the MAC entity shall consider sequentially that the Nth (N >= 0) uplink grant occurs in the symbol for which: $\begin{matrix}\left[\left(SFN\times numberOfSlotsPerFrame\times numberOfSymbolsPerSlot\right)+\left(\begin{matrix}slot number in the \\ frame \times numberOfSymbolsPerSlot\end{matrix}\right)+symbol number in the slot\right] = \\ \left[\left(\begin{matrix}{SFN}_{start time} \times numberOfSlotsPerFrame \times numberOfSymbolsPerSlot + {slot}_{start time} \times \\ numberOfSymbolsPerSlot + {symbol}_{start time}\end{matrix}\right)+N\times periodicity\right] modulo \left(\begin{matrix}1024 \times \\ numberOfSlotsPerFrame \times numberOfSymbolsPerSlot\end{matrix}\right) .\end{matrix}$

According to the time domain location of the transmission occasions, the HARQ process ID for each transmission occasion.

For configured uplink grants neither configured with harq-ProcID-Offset2 nor with cg-*RetransmissionTimer*, the HARQ Process ID associated with the first symbol of a UL transmission is derived from the following equation: 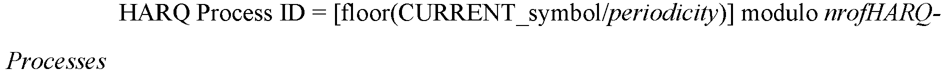 HARQ Process ID = [floor(CURRENT_symbol/periodiciry)] modulo nrofHARQProcesses

For configured uplink grants with *harq-ProcID-Offset2*, the HARQ Process ID associated with the first symbol of a UL transmission is derived from the following equation: 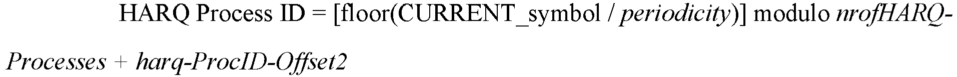 HARQ Process ID = [floor(CURRENT_symbol / periodicity)] modulo nrofHARQProcesses + harq-ProcID-Offset2

The "CURRENT_symbol" is the result for transmission occasion determination formula.

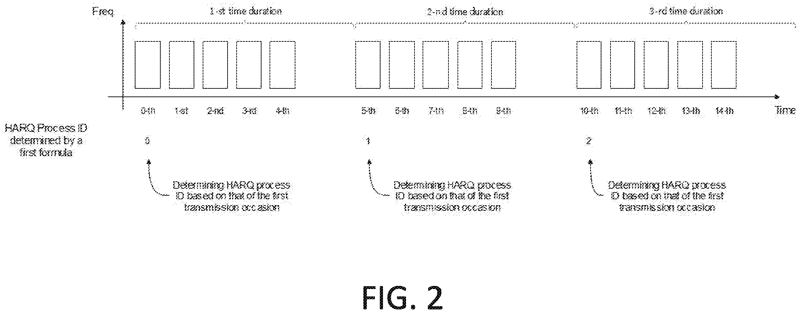

FIG. 2 shows a schematic diagram of a configured grant transmission according to an embodiment of the present disclosure. In this embodiment, the HARQ process ID of the first (1^{st}) transmission occasion in one time duration is determined by a first formula, while the HARQ process IDs of the remaining transmission occasions of in this time duration are based on the HARQ process ID of the first transmission occasion.

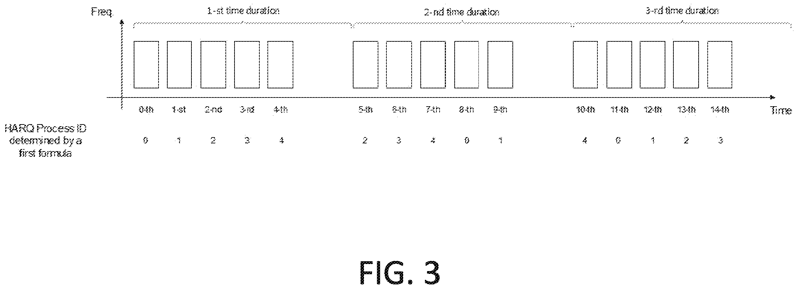

FIG. 3 shows a schematic diagram of a configured grant transmission according to an embodiment of the present disclosure. In this embodiment, the HARQ process IDs of the transmission occasions in one time duration are determined by a first formula.

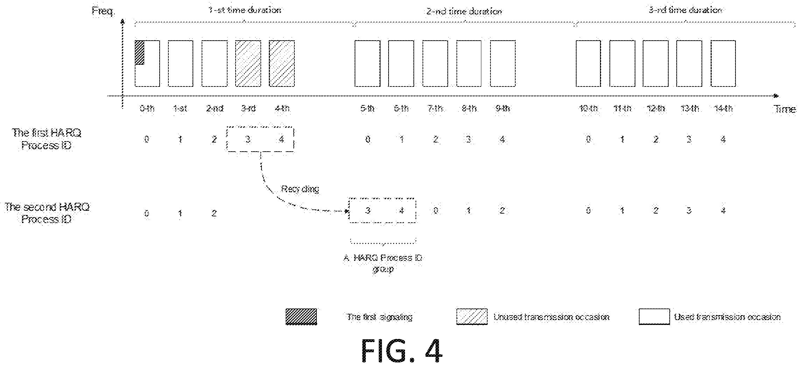

FIG. 4 shows a schematic diagram of a configured grant transmission according to an embodiment of the present disclosure. In FIG. 4, the HARQ process IDs of the transmission occasions are initially determined by the high layer parameters. The HARQ process IDs may be modified once/after the UE transmits the first signaling for indicating unused transmission occasion(s). In the present disclosure, the transmission occasion used/configured for the data transmission is call used transmission occasion and the transmission occasion not used/configured for the data transmission is call unused transmission occasion. For example, in the 1^{st} time duration of FIG. 4, the 0^{th}, 1^{st} and 2^{nd} transmission occasions are the used transmission occasions, and the 3^{rd} and 4^{th} transmission occasions are the unused transmission occasions. In an embodiment, the first signaling may also explicitly or implicitly indicate the unused HARQ process IDs (i.e., the HARQ process IDs configured for the unused CG occasions). Based on the released HARQ process IDs determined by the first signaling, the HARQ process IDs of the transmission occasions in subsequent time occasion may be modified. For example, as shown in FIG. 4, the HARQ IDs configured for the unused transmission occasions (i.e., 3^{rd} and 4^{th} transmission occasions) in the 1^{st} time duration may be reused/recycled for the transmission occasions in the 2^{nd} time duration.

Note that, in FIG. 4, the HARQ process IDs for the transmission occasions in the 3^{rd} time duration are determined by a default way (e.g., the same way as determining the HARQ process IDs for the transmission occasions in the 1^{st} time duration) because the first signaling is not transmitted in the 2^{nd} time duration.

In a first embodiment, the UE performs:
receiving, from a network node, a control signaling;
determining at least one first HARQ process IDs for a plurality of transmission occasions based on the first formula and the control signaling;
transmitting a first signaling associated with the transmission occasions;
determining a plurality of second HARQ process IDs for a plurality of transmission occasions based on the first signaling.

In an embodiment, the first signaling may be for the transmission occasions in a first time duration and the second HARQ process IDs may be for the transmission occasions in a second time duration.

In the first embodiment, the first time duration and the second time duration are consecutive time durations.

In an embodiment, the first formula is not limited to a formular.

The following items would be further discussed in subsequent embodiments:
- the interpretation of the control signaling;
- the interpretation of the transmission occasion;
- the interpretation of the first signaling;
- the method of a first HARQ process ID of a transmission occasion determination;
- the method of a second HARQ process ID of a transmission occasion determination.

### THE INTERPRETATION OF CONTROL SIGNALING

In some embodiments, the control signaling may comprises at least one high layer parameter, such as an RRC (radio resource control) signaling or a MAC (media access control) CE (control element) signaling.

In an embodiment, the RRC signaling can be *ConfiguredGrantConfig.*

In some embodiments, the control signaling may comprise a downlink control information (DCI) signaling.

In an embodiment, the DCI signaling is used for CG activation, such as DCI format 0_0/0_1/0_2 scrambled by a CS-RNTI.

### THE INTERPRETATION OF TRANSMISSION OCCASION

In some embodiments, there is (only) one transmission occasion in the time duration and the transmission occasion is for the configured grant transmission. In these embodiments, the transmission occasions may be periodic.

In the first embodiment, there are a plurality of transmission occasions in single time duration and the transmission occasions are for the configured grant transmission. In this first embodiment, the time durations are periodic.

In an embodiment of single time duration comprising multiple transmission occasions, a part of the transmission occasions in one time duration is used for the data transmission and another part of the transmission occasions in the same time duration is not used for data transmission. In the present disclosure, the transmission occasion used/configured for the data transmission is call used transmission occasion and the transmission occasion not used/configured for the data transmission is call unused transmission occasion.

In some embodiments, the length of the time duration includes a number of symbols.

In an embodiment, a number of symbols refer to a (symbol) duration covering multiple transmission occasions.

In some embodiments, the length of the time duration includes a number of slots.

In an embodiment, a number of slots refer to a (slot) duration covering multiple transmission occasions.

In some embodiments, the length of the time duration includes a number of millisecond(s).

In an embodiment, a number of millisecond(s) refer to a (millisecond(s)) duration covering multiple transmission occasions.

In some embodiments, the length of time duration includes one periodicity for a configured grant.

In an embodiment, the length of time duration includes multiple periodicities for a configured grant.

In an embodiment, the length of time duration is the periodicity for the configured grant configured by *periodicity* in the RRC signaling *configuredGrantConfig.*

### THE INTERPRETATION OF FIRST SIGNALING

In some embodiments, the first signaling includes at least one of:
- an uplink control information (UCI) signaling; or
- a MAC CE signaling.

In an embodiment, the UCI signaling is a CG-UCI signaling.

In an embodiment, the UCI signaling is a dedicated UCI signaling.

In the first embodiment, the first signaling includes transmission occasion release information of at least one unused transmission occasion which is unused for a data transmission in the first time duration.

In an embodiment, the transmission occasion release information includes the number of unused transmission occasions in one or more time durations.

In an embodiment, the transmission occasion release information includes the duration of the unused transmission occasion(s) in one or more time durations.

In an embodiment, the transmission occasion release information includes an indication (e.g., a bitmap) to indicate whether the transmission occasions in one or more time durations are used or unused.

In an embodiment, the indication (e.g., a bitmap) included in the transmission occasion release information is configured to indicate whether the transmission occasions in one or more time durations are unused.

In some embodiments, the first signaling includes the transmission occasion release information of the unused transmission occasion(s) which is unused for the data transmission in the first time duration and the information of the first HARQ process ID of the unused transmission occasion(s) which is unused for a data transmission in the first time duration.

In an embodiment, the released transmission occasions information indicates HARQ process ID(s) associated with the released/unused transmission occasions.

For example, in FIG 4, the 3-rd and 4-th transmission occasions with their corresponding HARQ process ID= 3 and HARQ process ID = 4 are unused. In this embodiment, the first signaling may report the HARQ process IDs 3 and 4 to the base station.

In some embodiments, the first signaling is transmitted in the CG PUSCH.

In an embodiment, the first signaling is transmitted in the first(1-st) configured CG PUSCH in one or more time durations.

In an embodiment, the first signaling is transmitted in the first (1-st) valid CG PUSCH in one or more time durations. The valid CG PUSCH refers to the CG PUSCH carrying data.

In an embodiment, the first signaling is transmitted in all the valid CG PUSCHs in one or more time durations.

In an embodiment, the first signaling is transmitted in pre-configured CG PUSCHs in one or more time duration, where the pre-configured CG PUSCHs are determined by at least the RRC signaling.

In an embodiment, the first signaling is transmitted in a PUSCH scheduled by a DCI signaling if the PUSCH collides/overlaps with the CG PUSCH originally configured/used for transmitting the UCI signaling in the time domain.

In an embodiment, the first signaling is transmitted in a PUSCH scheduled by a DCI signaling if the PUSCH collides/overlaps with the CG PUSCH originally configured/used for transmitting the UCI signaling in the frequency domain.

In an embodiment, the first signaling is transmitted in a PUSCH scheduled by a DCI signaling if the PUSCH collides/overlaps with the CG PUSCH originally configured/used for transmitting the first signaling in both the time domain and the frequency domain.

In an embodiment, the first signaling is transmitted in a PUSCH scheduled by a DCI signaling if the CG PUSCH configured to transmit the first signaling is decoded incorrectly. Moreover, the PUSCH scheduled by the DCI may be a re-transmission PUSCH for the CG PUSCH.

In an embodiment, if the CG PUSCH configured to transmit the first signaling is decoded incorrectly, the first signaling is transmitted in next CG PUSCH in the same time duration.

### METHOD OF FIRST HARQ PROCESS ID OF TRANSMISSION OCCASION

### DETERMINATION

In some embodiments, a valid transmission occasion is the transmission occasion not overlapped with a physical uplink shared channel (PUSCH) scheduled by a DCI signaling.

In the first embodiment, determining the first HARQ process ID of the transmission occasion based on the first formula includes:
determining the HARQ process ID of the 1-st transmission occasion in each time duration based on the first formula and determining the remaining transmission occasion based on the HARQ process ID of the 1-st transmission occasion in one time duration.

In an embodiment, determining the first HARQ process ID of the 1-st (valid) transmission occasion in each time duration based on the first formula comprises using the first formula to calculate the HARQ process ID of the (valid) transmission occasion.

Further, determining the remaining transmission occasion based on the HARQ process ID of the 1-st transmission occasion in one time duration is setting the same HARQ process ID as the HARQ process ID of the 1-st transmission occasion in the time duration for all the remaining transmission occasions.

In particular, the HARQ process IDs of the remaining transmission occasion in the time duration are determined to be equal to the HARQ process ID of the 1-st transmission occasion in the time duration.

In an embodiment, determining the remaining transmission occasions in each time duration based on the HARQ process ID of the 1-st transmission occasion in each time duration is/includes setting an increasing order of HARQ process IDs starting from the HARQ process ID of the 1-st transmission occasion in the time duration for the remaining transmission occasions.

As an alternative, the HARQ process IDs of the remaining transmission occasion in the time duration are determined to be in an increasing order starting from the HARQ process ID of the 1-st transmission occasion in the time duration. For instance, the HARQ process ID of the 2^{nd} transmission occasion in the time duration is equal to the HARQ process ID of the 1-st transmission occasion in the time duration plus 1, the HARQ process ID of the 3^{rd} transmission occasion in the time duration is equal to the HARQ process ID of the 1-st transmission occasion in the time duration plus 2, and so on.

In an embodiment, the remaining transmission occasions are not overlapped with a physical uplink shared channel (PUSCH) scheduled by a DCI signaling. That is the remaining transmission occasions do not collide with the PUSCH scheduled by the DCI signaling.

Alternatively, in the first embodiment, determining the first HARQ process ID of the transmission occasion based on the first formula includes:
determining (all of) the HARQ process IDs of the transmission occasions in each time duration based on the first formula.

In an embodiment, determining the first HARQ process IDs of the (valid) transmission occasions in each time duration based on the first formula is/includes using the first formula to calculate the HARQ process IDs of the all (valid) transmission occasions in each duration.

In some embodiments, the first formula of determining the HARQ process ID of the transmission occasion is associated with at least one of:
- time location information of the starting symbol for the transmission occasion;
- periodicity information (of the time duration);
- the number of HARQ process IDs; or
- offset information.

In an embodiment, the offset information is determined by or based on the number of transmission occasions in one time duration. In this case, the offset information is a set of integer values ranging from 0 to the number of transmission occasions minus 1.

For example, if the number of transmission occasions is 4, the offset information may be {0, 1, 2, 3}. or the offset information is {2, 3, 0, 1} with 2 unit cyclic shift based on the increasing order set {0, 1, 2, 3}.

In an embodiment, the offset information is determined by or based on the number of the first HARQ process IDs. In this case, the offset information is a set of integer values ranging from 0 to the number of the first HARQ process IDs minus 1.

For example, if the number of HARQ process IDs is 8, the offset information may be {0, 1, 2, 3, 4, 5, 6, 7}. As an alternative, the offset information may be {4, 5, 6, 7, 0, 1, 2, 3} with 4 unit cyclic shift based on the increasing order set {0, 1, 2, 3, 4, 5, 6, 7}.

In an embodiment, the first formula is associated with time location information of a starting symbol of the transmission occasion, periodicity information determined by the control signaling, and a number of first HARQ process IDs.

In some embodiments, the first formula can be expressed as: 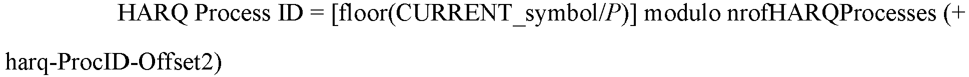 HARQ Process ID = [floor(CURRENT_symbol/P)] modulo nrofHARQProcesses (+ harq-ProcID-Offset2) where CURRENT_symbol denotes the time location information of the starting symbol of the transmission occasion, P denotes the periodicity information determined by the control signaling, nrofHARQprocesses denotes the number of first HARQ process IDs.

As an alternative, the periodicity information P is the length of the time duration indicating the periodicity of configured grant, e.g., 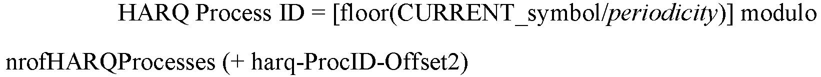 HARQ Process ID = [floor(CURRENT_symbol/periodicity)] modulo nrofHARQProcesses (+ harq-ProcID-Offset2)

As an alternative, the periodicity information P is a quotient of dividing the length of time duration by the number of transmission occasions in one time duration, e.g., 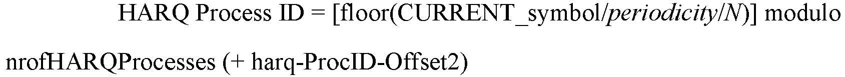 HARQ Process ID = [floor(CURRENT_symbol/periodicity/N)] modulo nrofHARQProcesses (+ harq-ProcID-Offset2)
where N is the number of transmission occasions in one time duration, when the length time duration is the periodicity of configured grant, or 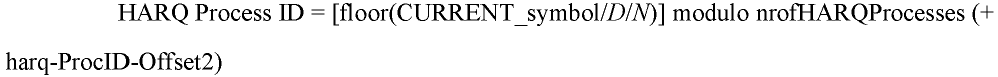 HARQ Process ID = [floor(CURRENT_symbol/D/N)] modulo nrofHARQProcesses (+ harq-ProcID-Offset2)
where D is the number of symbols covering multiple transmission occasions, when the length time duration is the symbol(s) duration covering multiple transmission occasions.

In an embodiment, the first formula is associated with time location information of a starting symbol of the transmission occasion, periodicity information determined by the control signaling, a number of first HARQ process IDs and an offset information

In some embodiments, the first formula can be expressed as: 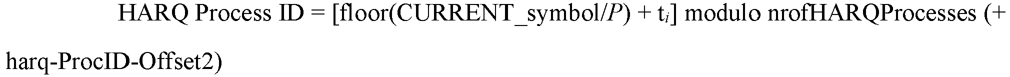 HARQ Process ID = [floor(CURRENT_symbol/P) + ti] modulo nrofHARQProcesses (+ harq-ProcID-Offset2) where t*ᵢ* denotes one of values in the offset information. The values of the offset information are used one by one, i.e., *i* = mod(*J*, *N*) or *i* = mod(*J*, nrofHARQProcesses), where *J* denote the *J*-th transmission occasions or the *J*-th time duration. Moreover, *P* = *periodicity, P* = *periodicity*/*N,* or *P = D*/*N.*

As an alternative, the first formula can be expressed as: 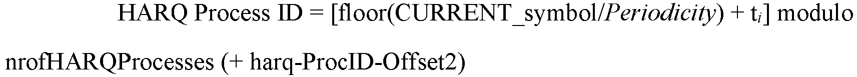 HARQ Process ID = [floor(CURRENT_symbol/Periodicity) + ti] modulo nrofHARQProcesses (+ harq-ProcID-Offset2)

As an alternative, the first formula can be expressed as: 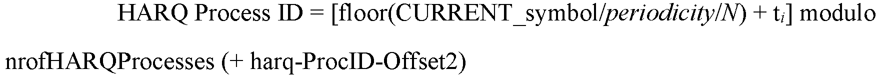 HARQ Process ID = [floor(CURRENT _symbol/periodicity/N) + ti] modulo nrofHARQProcesses (+ harq-ProcID-Offset2)

As an alternative, the first formula can be expressed as: 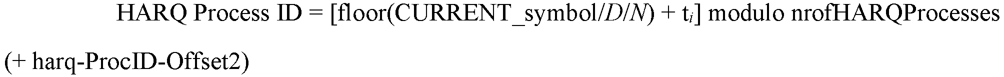 HARQ Process ID = [floor(CURRENT_symbol/D/N) + ti] modulo nrofHARQProcesses (+ harq-ProcID-Offset2)

### METHOD OF SECOND HARQ PROCESS ID OF TRANSMISSION OCCASION DETERMINATION

In some embodiments, the HARQ process ID group determined by the first signaling comprises first HARQ process ID(s) of the unused transmission occasion(s) which is unused for a data transmission in the first time duration.

For example, as illustrated in FIG.4, the unused transmission occasions are the 3-rd and 4-th transmission occasions with the corresponding HARQ process ID =3 and HARQ process ID =4, respectively. Therefore, the HARQ process ID group is {3, 4}.

In some embodiments, determining the second HARQ process IDs of the transmission occasions based on the first signaling includes:
determining the second HARQ process ID of the 1-st (valid) transmission occasion in one time duration based on a HARQ process ID group and determining the second HARQ process IDs of the remaining transmission occasion based on the second HARQ process ID of the 1-st (valid) transmission occasion in one time duration.

In an embodiment, determining the second HARQ process ID of the 1-st (valid) transmission occasion in one time duration based on the HARQ process ID group comprises/is selecting a predefined HARQ process ID in the HARQ process ID group.

In an embodiment, the predefined HARQ process ID is the largest HARQ process ID in the HARQ process ID group.

As an alternative, the predefined HARQ process ID is the smallest HARQ process ID in the HARQ process ID group.

As an alternative, the predefined HARQ process ID is a random HARQ process ID in the HARQ process ID group.

As an alternative, the predefined HARQ process ID is the 1-st HARQ process ID in the HARQ process ID group.

As an alternative, the predefined HARQ process ID is the HARQ process ID following the last HARQ process ID in the HARQ process ID group.

For example, the second HARQ process ID of the 1-st (valid) transmission occasion in one time duration is the 1-st HARQ process IDs in the second HARQ process ID group. In an embodiment of the HARQ process ID group being {ID1, ID2, ID3}, the 1-st HARQ process IDs is ID1.

In an embodiment, determining the second HARQ process IDs of the remaining transmission occasion based on the second HARQ process ID of the 1-st (valid) transmission occasion in one time duration is/includes setting the same HARQ process ID as the second HARQ process ID of the 1-st (valid) transmission occasion in the time duration to all the transmission occasions in the time duration.

For example, the second HARQ process IDs of the remaining transmission occasions in the time duration may be determined to be equal to the second HARQ process ID of the 1-st (valid) transmission occasion in the time duration.

In an embodiment, determining the second HARQ process IDs of the remaining transmission occasions based on the second HARQ process ID of the 1-st (valid) transmission occasion in one time duration is/comprises setting the HARQ process IDs in an increasing order of HARQ process IDs starting from the HARQ process ID of the 1-st (valid) transmission occasion in the time duration for the remaining transmission occasions in the time duration.

For example, the HARQ process IDs of the remaining transmission occasions in the time duration are determined to be in an increasing order starting from the second HARQ process ID of the 1-st (valid) transmission occasions in the time duration.

In an embodiment, the remaining transmission occasions are the valid transmission occasions not overlapped with a PUSCH scheduled by a DCI signaling.

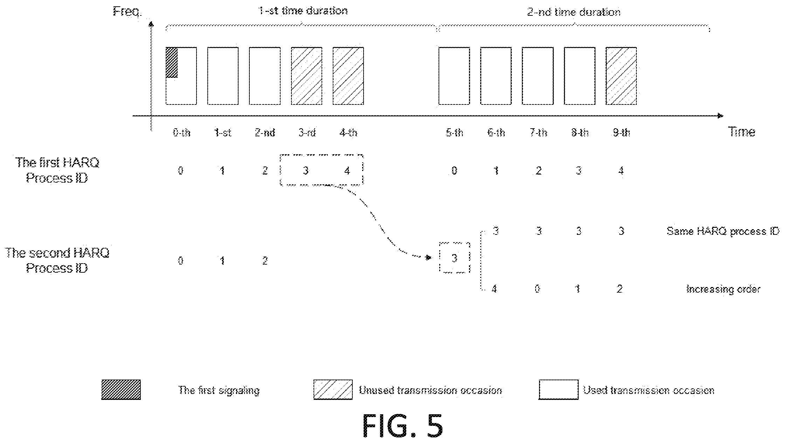

FIG. 5 shows a schematic diagram of a configured grant transmission according to an embodiment of the present disclosure. In FIG. 5, there are 5 transmission occasions in one time duration and the total number of HARQ process IDs is also 5. The first HARQ process IDs of transmission occasions are determined as {0,1,2,3,4} in the first time duration. In this embodiment, the 3-rd and 4-th transmission occasions in the 1-st time duration are unused transmission occasions. Thus, the HARQ process ID group is {3,4}, i.e., the corresponding HARQ process IDs of the 3-rd and 4-th transmission occasions in the 1-st time duration. As to the HARQ process ID determination for the transmission occasions in the 2-nd time duration, the HARQ process ID of the 1-st transmission occasion in the 2-nd time duration is set to the 1-st HARQ process ID in the HARQ process ID group, i.e., HARQ process ID = 3. In FIG. 5, the HARQ process IDs of the remaining 4 transmission occasions in the 2-nd time duration can be set to all 3. As an alternative, the HARQ process IDs of the remaining 4 transmission occasions in the 2-nd time duration can be set as an increasing order starting from the HARQ process ID = 3, i.e., {4, 0, 1, 2}.

In some embodiments, the HARQ process ID group determined by the first signaling comprises second HARQ process ID(s) of unused transmission occasion(s) which is unused for a data transmission in the second time duration.

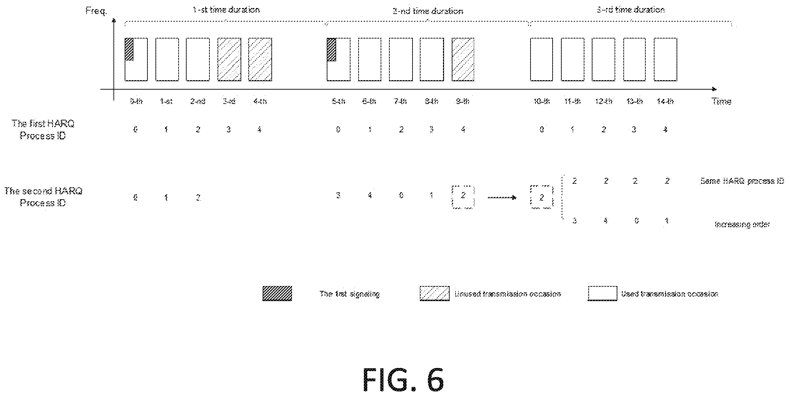

FIG. 6 shows a schematic diagram of a configured grant transmission according to an embodiment of the present disclosure In FIG. 6, the HARQ process ID in the 2-nd time duration is determined as the embodiment shown in FIG 5. In FIG. 6, the 9-th transmission occasion is unused for the data transmission. The previously determined second HARQ process ID is comprised in the HARQ process ID group indicated by the first signaling of the 2-nd time duration, to determine the HARQ process IDs for the transmission occasion in the 3-rd time duration.

In some embodiments, determining the second HARQ process IDs of the transmission occasions based on the first signaling includes:
determining the second HARQ process ID of the 1-st (valid) transmission occasion in one time duration based on a HARQ process ID group and determining the second HARQ process IDs of the remaining transmission occasion based on the second HARQ process ID of the 1-st (valid) transmission occasion in one time duration.

In an embodiment, determining the second HARQ process ID of the 1-st (valid) transmission occasion in one time duration based on a HARQ process ID group is/comprises selecting the predefined HARQ process ID in the HARQ process ID group.

In an embodiment, the predefined HARQ process ID is the largest HARQ process ID in the HARQ process ID group.

As an alternative, the predefined HARQ process ID is the smallest HARQ process ID in the HARQ process ID group.

As an alternative, the predefined HARQ process ID is the random HARQ process ID in the HARQ process ID group.

As an alternative, the predefined HARQ process ID is the 1-st HARQ process ID in the HARQ process ID group.

As an alternative, the predefined HARQ process ID is the HARQ process ID following the last HARQ process ID in the HARQ process ID group.

For example, the second HARQ process ID of the 1-st (valid) transmission occasion in one time duration is the 1-st HARQ process IDs in the HARQ process ID group. Assuming HARQ process ID group is {ID1, ID2, ID3}, the 1-st HARQ process ID is ID1.

In an embodiment, determining the second HARQ process IDs of the remaining transmission occasion based on the second HARQ process ID of the 1-st (valid) transmission occasion in one time duration is/comprises setting the same HARQ process ID as the second HARQ process ID of the 1-st (valid) transmission occasion in the time duration for all the transmission occasions in the time duration.

For example, the second HARQ process IDs of the remaining transmission occasions in the time duration may be determined to be equal to the second HARQ process ID of the 1-st (valid) transmission occasion in the time duration.

In an embodiment, determining the second HARQ process IDs of the remaining transmission occasions based on the second HARQ process ID of the 1-st (valid) transmission occasion in one time duration is/comprises setting the HARQ process IDs in an increasing order of HARQ process IDs starting from the HARQ process ID of the 1-st (valid) transmission occasion in the time duration for the remaining transmission occasions in the time duration.

For example, the HARQ process IDs of the remaining transmission occasion in the time duration are determined to be in an increasing order starting from the second HARQ process ID of the 1-st transmission occasions in the time duration.

In an embodiment, the remaining transmission occasions are the valid transmission occasions not overlapped with a PUSCH scheduled by a DCI signaling.

In FIG. 6, 5 transmission occasions are configured in one time duration and the total number of HARQ process IDs is also 5. The first HARQ process IDs of transmission occasions are determined as {3,4,0,1,2} in the 2-nd time duration according to the example in FIG. 5. The 9-th transmission occasion is unused transmission occasion in the 2-nd time duration. Therefore, the HARQ process ID group is {2}, i.e., the corresponding HARQ process ID of the 9-th transmission occasion in the 2-nd time duration. For the HARQ process ID determination for the transmission occasions in the 3-rd time duration, the HARQ process ID of the 1-st transmission occasion in 3-rd time duration is set to the 1-st HARQ process ID in the HARQ process ID group, i.e., HARQ process ID = 2. The HARQ process IDs of the remaining 4 transmission occasions in the 3-rd time duration can be set to all 2 or an increasing order starting from the HARQ process ID = 2, such as {3, 4, 0, 1}.

In some embodiments, the HARQ process ID group determined by the first signaling comprises first HARQ process ID(s) of used transmission occasion(s) which is used for a data transmission in the first time duration.

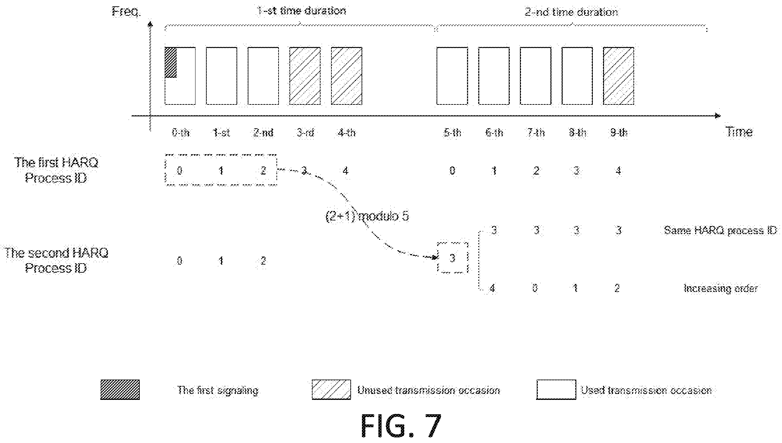

FIG. 7 shows a schematic diagram of a configured grant transmission according to an embodiment of the present disclosure. In FIG. 7, the used transmission occasions in the 1-st time duration are the 0-th,1-st and 2-nd transmission occasions with the corresponding HARQ process IDs 0, 1, 2, respectively. In this embodiment, the HARQ process ID group is {0,1,2}.

In some embodiments, determining the second HARQ process IDs of the transmission occasions based on the first signaling includes:
determining the second HARQ process ID of the 1-st (valid) transmission occasion in one time duration based on a HARQ process ID group and determining the second HARQ process IDs of the remaining transmission occasion based on the second HARQ process ID of the 1-st transmission occasion in one time duration.

In an embodiment, determining the second HARQ process ID of the 1-st (valid) transmission occasion in one time duration based on a HARQ process ID group is/comprises selecting the predefined HARQ process ID in the HARQ process ID group.

In an embodiment, the predefined HARQ process ID is the largest HARQ process ID in the HARQ process ID group.

As an alternative, the predefined HARQ process ID is the smallest HARQ process ID in the HARQ process ID group.

As an alternative, the predefined HARQ process ID is the random HARQ process ID in the HARQ process ID group.

As an alternative, the predefined HARQ process ID is the 1-st HARQ process ID in the HARQ process ID group.

As an alternative, the predefined HARQ process ID is the HARQ process ID following the last HARQ process ID in the HARQ process ID group.

For example, the second HARQ process ID of the 1-st (valid) transmission occasion in one time duration is the HARQ process ID following the last HARQ process IDs in the HARQ process ID group. In an embodiment of the HARQ process ID group is {ID1, ID2, ID3}, the HARQ process ID following the last HARQ process IDs is [(ID3 + 1) modulo nrofHARQProcesses], where nrofHARQProcesses is the total number of HARQ process IDs.

In an embodiment, determining the second HARQ process IDs of the remaining transmission occasion based on the second HARQ process ID of the 1-st (valid) transmission occasion in one time duration is/comprises setting the same HARQ process ID as the second HARQ process ID of the 1-st (valid) transmission occasion in the time duration for all the transmission occasions in the time duration.

For example, the second HARQ process IDs of the remaining transmission occasions in the time duration may be determined to be equal to the second HARQ process ID of the 1-st (valid) transmission occasion in the time duration.

In an embodiment, determining the second HARQ process IDs of the remaining transmission occasions based on the second HARQ process ID of the 1-st (valid) transmission occasion in one time duration is/comprises setting the HARQ process IDs in an increasing order starting from the HARQ process ID of the 1-st (valid) transmission occasion in the time duration for the remaining transmission occasions in the time duration.

For example, the HARQ process IDs of the remaining transmission occasions in the time duration are determined to be in an increasing order starting from the second HARQ process ID of the 1-st (valid) transmission occasions in the time duration.

In an embodiment, the remaining transmission occasions are the valid transmission occasions not overlapped with a PUSCH scheduled by a DCI signaling.

FIG. 7 shows a schematic diagram of a configured grant transmission according to an embodiment of the present disclosure. In FIG. 7, 5 transmission occasions are configured in one time duration and the total number of HARQ process IDs is also 5. The first HARQ process IDs of transmission occasions are determined as {0,1,2,3,4} in the 1-st time duration in FIG. 7, wherein the 0-th, 1-st and 2-nd transmission occasions are used transmission occasions used for transmitting data in the 1-st time duration. In this embodiment, the HARQ process ID group is {0,1,2}, i.e., the corresponding HARQ process IDs of the 0-th, 1-st and 2-nd transmission occasions in the 1-st time duration. As to the HARQ process ID determination for the transmission occasions in the 2-nd time duration, the HARQ process ID of the 1-st transmission occasion in 2-nd time duration is set to the HARQ process ID following the last HARQ process ID in the HARQ process ID group, i.e., HARQ process ID = 3. The HARQ process IDs of the remaining 4 transmission occasions in the 2-nd time duration can be set to all 3 or in an increasing order starting from the HARQ process ID = 3, such as {4, 0, 1, 2}.

In some embodiments, the HARQ process ID group determined by the first signaling comprises second HARQ process ID(s) of used transmission occasion(s) which is used for a data transmission in the second time duration.

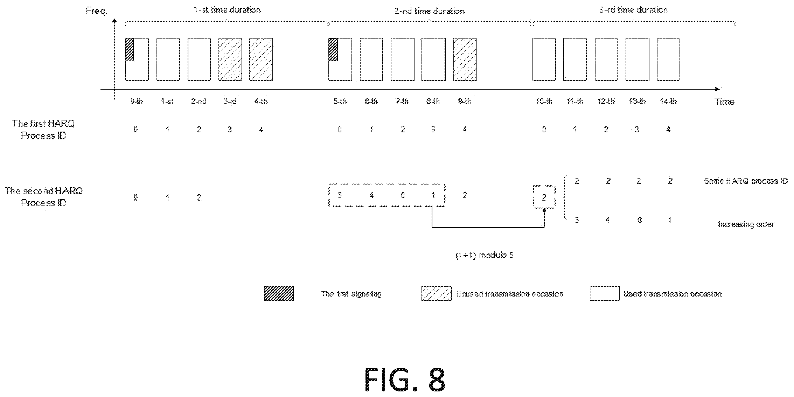

For example, in FIG. 8, the used transmission occasions in the 2-nd time duration are the 5-th,6-th 7-th, and 8-th transmission occasions with the corresponding HARQ process ID = 3, 4, 0, 1, respectively. Therefore, the HARQ process ID group indicated by the first signaling is {3, 4, 0, 1}.

In some embodiments, determining the second HARQ process IDs of the transmission occasions based on the first signaling includes:
determining the second HARQ process ID of the 1-st (valid) transmission occasion in one time duration based on a HARQ process ID group and determining the second HARQ process IDs of the remaining transmission occasion based on the second HARQ process ID of the 1-st (valid) transmission occasion in one time duration.

In an embodiment, determining the second HARQ process ID of the 1-st (valid) transmission occasion in one time duration based on a HARQ process ID group is/comprises selecting the predefined HARQ process ID in the HARQ process ID group.

In an embodiment, the predefined HARQ process ID is the largest HARQ process ID in the HARQ process ID group.

As an alternative, the predefined HARQ process ID is the smallest HARQ process ID in the HARQ process ID group.

As an alternative, the predefined HARQ process ID is the random HARQ process ID in the HARQ process ID group.

As an alternative, the predefined HARQ process ID is the 1-st HARQ process ID in the HARQ process ID group.

As an alternative, the predefined HARQ process ID is the HARQ process ID following the last HARQ process ID in the HARQ process ID group.

For example, the second HARQ process ID of the 1-st (valid) transmission occasion in one time duration is the HARQ process ID following the last HARQ process IDs in the second HARQ process ID group. Assuming HARQ process ID group is {ID1, ID2, ID3}. The HARQ process ID following the last HARQ process IDs is [(ID3 + 1) modulo nrofHARQProcesses], where nrofHARQProcesses is the total number of HARQ process IDs.

In an embodiment, determining the second HARQ process IDs of the remaining transmission occasion based on the second HARQ process ID of the 1-st (valid) transmission occasion in one time duration is/includes setting the same HARQ process ID as the second HARQ process ID of the 1-st (valid) transmission occasion in the time duration for all the transmission occasions in the time duration.

For example, the second HARQ process IDs of the remaining transmission occasions in the time duration may be determined to be equal to the second HARQ process ID of the 1-st (valid) transmission occasion in the time duration.

In an embodiment, determining the second HARQ process IDs of the remaining transmission occasions based on the second HARQ process ID of the 1-st (valid) transmission occasion in one time duration comprises/is setting the HARQ process IDs in an increasing order of HARQ process IDs starting from the HARQ process ID of the 1-st (valid) transmission occasion in the time duration for the remaining transmission occasions in the time duration.

For example, the HARQ process IDs of the remaining transmission occasion in the time duration are determined to be in an increasing order starting from the second HARQ process ID of the 1-st transmission occasion in the time duration.

In an embodiment, the remaining transmission occasions are the valid transmission occasions not overlapped with a PUSCH scheduled by a DCI signaling.

FIG. 8 shows a schematic diagram of a configured grant transmission according to an embodiment of the present disclosure. In FIG. 8, 5 transmission occasions are configured in one time duration and the total number of HARQ process IDs is also 5. The second HARQ process ID of transmission occasions are determined as {3,4,0,1,2} in the 2-nd time duration according to the embodiment of FIG. 7. The 5-th, 6-th, 7-th and 8-th transmission occasions are used transmission occasion transmitting data in the 2-nd time duration. In this embodiment, the HARQ process ID group is {3,4,0,1}, i.e., the corresponding HARQ process IDs of the 5-th, 6-th, 7-th and 8-th transmission occasion in the 2-nd time duration, respectively. For the HARQ process ID determination for the transmission occasions in the 3-rd time duration, the HARQ process ID of the 1-st transmission occasion in 2-nd time duration is set to the HARQ process ID following the last HARQ process ID in the HARQ process ID group, i.e., HARQ process ID = (1+1) modulo 5 = 2. And the HARQ process IDs of the remaining 4 transmission occasions in the 3-rd time duration can be set to all 2. Or it can be an increasing order starting from the HARQ process ID = 2, such as {3, 4, 0, 1}.

In some embodiments, determining the second HARQ process IDs of the transmission occasions based on the first signaling includes:
determining the second HARQ process ID of the 1-st (valid) transmission occasion in one time duration based on a HARQ process ID group and determining the second HARQ process IDs of the remaining transmission occasion based on the second HARQ process ID of the 1-st (valid) transmission occasion in one time duration.

In an embodiment, determining the second HARQ process ID of the 1-st (valid) transmission occasion in one time duration based on a HARQ process ID group is/includes selecting the predefined HARQ process ID in the HARQ process ID group and plus the predefined HARQ process ID and an offset HARQ process ID, where the offset HARQ process ID is determined by at least RRC signaling.

In an embodiment, the offset HARQ process IDs are different per period. For example, the offset HARQ process IDs are in an increasing order per period.

In an embodiment, the offset HARQ process IDs ranging from 0 to the number of HARQ process IDs configured by RRC signaling.

In an embodiment, the offset HARQ process ID is used to shift the HARQ process IDs of the transmission occasions cyclically.

The following procedure is same as the examples mentioned above.

In some embodiments, determining the second HARQ process IDs of the transmission occasions based on the first signaling includes:
determining the second HARQ process IDs of the first K (valid) transmission occasions in one time duration based on the second HARQ process ID group and determining the second HARQ process IDs of the remaining transmission occasions based on the second HARQ process IDs of the first K (valid) transmission occasions in the time duration, where K is a positive integer and K is not larger than N (i.e., the number of transmission occasions in the time duration).

In an embodiment, the second HARQ process IDs of the first K (valid) transmission occasions in one time duration is K HARQ process IDs in the HARQ process ID group.

In an embodiment, the HARQ process ID group includes the HARQ process IDs of the unused transmission occasions.

In an embodiment, the second HARQ process IDs of the remaining transmission occasions in the time duration are determined to be equal to a pre-defined HARQ process ID associated with the second HARQ process IDs of the first K (valid) transmission occasions in the time duration.

For instance, the pre-defined HARQ process ID may be:
- the largest HARQ process ID;
- the smallest HARQ process ID;
- a random HARQ process ID,
- the 1st HARQ process ID, or
- the last HARQ process ID.

In an embodiment, the HARQ process IDs of the remaining transmission occasions in the time duration are determined as the HARQ process IDs in an increasing order starting from a pre-defined HARQ process ID within the HARQ process IDs of the first Kt (valid) transmission occasions in the time duration. For example, the pre-defined HARQ process ID may be the largest HARQ process ID in the second HARQ process ID group; the smallest HARQ process ID in the second HARQ process ID group; or a random HARQ process ID in the second HARQ process ID group.

In an embodiment, the remaining transmission occasions are not overlapped with a PUSCH scheduled by a DCI signaling.

In an embodiment, the second HARQ process IDs for the transmission occasions are determined by performing, based on the first signaling, a cyclic shift on the HARQ process IDs in the first HARQ process ID group.

In some embodiments, determining the second HARQ process IDs of the transmission occasions based on the first signaling includes:
determining (all of) the HARQ process ID of the transmission occasions in one time duration based on the second HARQ process ID group and the first formula.

In an embodiment, the first formula is associated with the time location information of the starting symbol for the transmission occasion, the periodicity information, the number of HARQ process IDs, and the offset information. The formula can be referred to the above embodiments.

In an embodiment, the offset information is/comprises an offset set comprising the values ranging from 0 to N-1 (i.e., the number of transmission occasions in one time duration minus 1.)

In an embodiment, the offset set comprises a first offset subset and a second offset subset.

In an embodiment, the first offset subset comprises the value ranging from 0 to N-1 except the value in the HARQ process ID group.

In an embodiment, the second offset subset comprises the values in the HARQ process ID group.

In an embodiment, the HARQ process ID of the (valid) transmission occasions in one time duration is determined by the first formula using the second offset subset first, and then determined by the first formula using the first offset subset.

In an embodiment, the HARQ process ID group determined by the first signaling comprises second HARQ process ID(s) of unused transmission occasion(s) which is unused for a data transmission in the first time duration (e.g., 2-nd transmission occasion in FIG. 6).

For example, as illustrated in FIG 6, the HARQ process ID group includes the HARQ process IDs of unused transmission occasions, i.e., HARQ process ID group = {2} in the 2-nd time duration. Assuming the case that the offset information is a set of integer values ranging from 0 to the number of transmission occasions minus 1, the offset information is {3, 4, 0, 1, 2}. Then the first offset subset is {3, 4, 0, 1}, i.e., the set {3,4,0,1,2} except the 2 in HARQ process ID group. While the second offset subset is {2}. In this embodiment, the first formula can be expressed as: 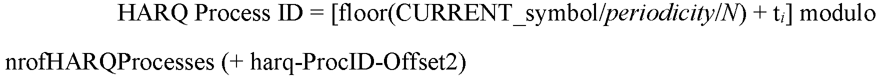 HARQ Process ID = [floor(CURRENT_symbol/periodicity/N) + ti] modulo nrofHARQProcesses (+ harq-ProcID-Offset2)

In an embodiment, the HARQ process ID of the transmission occasions in one time duration determined by the first formula using the second offset subset first means that the t*ᵢ* in the first formula is set as the element in the second offset subset one by one first, and then is set as the element in the first offset subset one by one if/after the elements the second offset subset are all used. In FIG. 7, the formula is expressed as

HARQ Process ID = [floor(CURRENT_symbol/*periodicity*/*N*) + 2] modulo nrofHARQProcesses (+ harq-ProcID-Offset2) first for the 1-st transmission occasion in the 3-rd time duration (i.e. the 10-th transmission occasion). As a result, the element in second offset subset is all used. In the following embodiments, the first formula uses the elements in the first offset subset one by one:
HARQ Process ID = [floor(CURRENT_symbol/*periodicity*/*N*)+3] modulo nrofHARQProcesses (+ harq-ProcID-Offset2), for the 2-nd transmission occasion in the 3-rd time duration (i.e. the 11-th transmission occasion);
HARQ Process ID = [floor(CURRENT*_*symbol/*periodicity*/*N*)+4] modulo nrofHARQProcesses (+ harq-ProcID-Offset2), for the 3-rd transmission occasion in the 3-rd time duration (i.e. the 12-th transmission occasion);
HARQ Process ID = [floor(CURRENT*_*symbol/*periodicity*/*N*)+0] modulo nrofHARQProcesses (+ harq-ProcID-Offset2), for the 4-th transmission occasion in the 3-rd time duration (i.e. the 13-th transmission occasion);
HARQ Process ID = [floor(CURRENT_symbol/*periodicity*/*N*)+1] modulo nrofHARQProcesses (+ harq-ProcID-Offset2), for the 5-th transmission occasion in the 3-rd time duration (i.e. the 14-th transmission occasion).

In an embodiment, the HARQ process ID of the (valid) transmission occasions in one time duration is determined by the first formula using the first offset subset first, and then determined by the first formula using the second offset subset.

In an embodiment, the HARQ process ID group determined by the first signaling comprises second HARQ process ID(s) of used transmission occasion(s) which is unused for a data transmission in the first time duration.

For example, as illustrated in FIG 8, the HARQ process ID group includes the HARQ process IDs of unused transmission occasions, i.e., HARQ process ID group = {3,4,0,1} in the 2-nd time duration. Assuming the case that the offset information is a set of integer values ranging from 0 to the number of transmission occasions minus 1, the offset information in this example is {3, 4, 0, 1, 2}. Then the first offset subset is {2}, i.e., the set {3,4,0,1,2} except the {3,4,0,1} in HARQ process ID group. While the second offset subset is {2}. In this embodiment, the first formula can be expressed as: 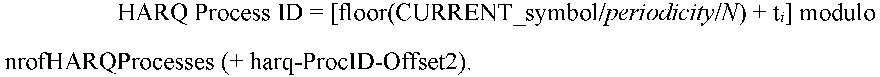 HARQ Process ID = [floor(CURRENT_symbol/periodicity/N) + ti] modulo nrofHARQProcesses (+ harq-ProcID-Offset2).

In this embodiment, the HARQ process ID of the transmission occasions in one time duration determined by the first formula using the first offset subset first means that the t*ᵢ* in the first formula is set as the element in in the first offset subset one by one first, and then is set as the element in the second offset subset one by one if/after the elements the first offset subset are all used. In FIG. 8, the formula can be expressed as:
HARQ Process ID = [floor(CURRENT_symbol/*periodicity*/*N*) + 2] modulo nrofHARQProcesses (+ harq-ProcID-Offset2) first for the 1-st transmission occasion in the 3-rd time duration (i.e. the 10-th transmission occasion). As a result, the element in the first offset subset is all used. In the following, the elements in the second offset subset are used in the first formula one by one:
HARQ Process ID = [floor(CURRENT_symbol/*periodicity*/*N*)+3] modulo nrofHARQProcesses (+ harq-ProcID-Offset2), for the 2-nd transmission occasion in the 3-rd time duration (i.e. the 11-th transmission occasion);
HARQ Process ID = [floor(CURRENT_symbol/*periodicity*/*N*)+4] modulo nrofHARQProcesses (+ harq-ProcID-Offset2), for the 3-rd transmission occasion in the 3-rd time duration (i.e. the 12-th transmission occasion);
HARQ Process ID = [floor(CURRENT_symbol/*periodicity*/*N*)+0] modulo nrofHARQProcesses (+ harq-ProcID-Offset2), for the 4-th transmission occasion in the 3-rd time duration (i.e. the 13-th transmission occasion); and
HARQ Process ID = [floor(CURRENT_symbol/*periodicity*/*N*)+1] modulo nrofHARQProcesses (+ harq-ProcID-Offset2), for the 5-th transmission occasion in the 3-rd time duration (i.e. the 14-th transmission occasion).

The above embodiments for second HARQ process ID determination essentially aims to shift the first HARQ process IDs cyclically.

In some embodiments, the HARQ process ID group comprises one or more first HARQ process IDs in one time duration.

In some embodiments, the HARQ process ID group comprises one or more second HARQ process IDs in one time duration.

For example, the HARQ process ID group comprises the first HARQ process IDs of unused transmission occasions in the previous *Pv* time duration, where *Pv* is a positive integer (e.g., *Pv* = 1).

For example, the HARQ process ID group comprises the second HARQ process IDs of unused transmission occasions in the previous *Pv* time duration, where *Pv* is a positive integer (e.g., *Pv* = 1).

For example, the HARQ process ID group comprises the first HARQ process IDs of used transmission occasions in the previous P time duration, where *Pv* is a positive integer (e.g., *Pv* = 1).

For example, the HARQ process ID group comprises the second HARQ process IDs of used transmission occasions in the previous P time duration, where *Pv* is a positive integer (e.g., *Pv* = 1).

In an embodiment, the first time duration is the previous time duration, where the first signaling is transmitted and HARQ process IDs of unused transmission occasions are obtained.

In an embodiment, the second time duration is the current time duration, where the HARQ process IDs of the all the transmission occasions need to be determined.

For example, in FIG 8, as an alternative, when HARQ process ID of the transmission occasions in the 2-nd time duration need to be determined, the first time duration is the 1-st time duration and the second time duration is the 2-nd time duration.

As an alternative, when HARQ process ID of the transmission occasions in the 3-rd time duration need to be determined, the first time duration is the 2-nd time duration and the second time duration is the 3-rd time duration.

In some embodiments, the second HARQ process IDs overrides the first HARQ process IDs in the second time duration when the first signaling is transmitted in the first time duration.

In some embodiments, the first HARQ process IDs are used in default in the second time duration when the first signaling is not transmitted in the first time duration.

In an embodiment, the case that the first signaling is not transmitted includes: the scheduling DCI for re-transmission is not received by UE in the *configuredGrantTimer* or *cg-retransmissionTimer.*

In an embodiment, the number of HARQ process IDs in the HARQ process ID group is equal to the number of unused transmission occasions in the previous Pv time duration.

In an embodiment, the number of HARQ process IDs in the HARQ process ID group is equal to the number of used transmission occasions in the previous Pv time duration.

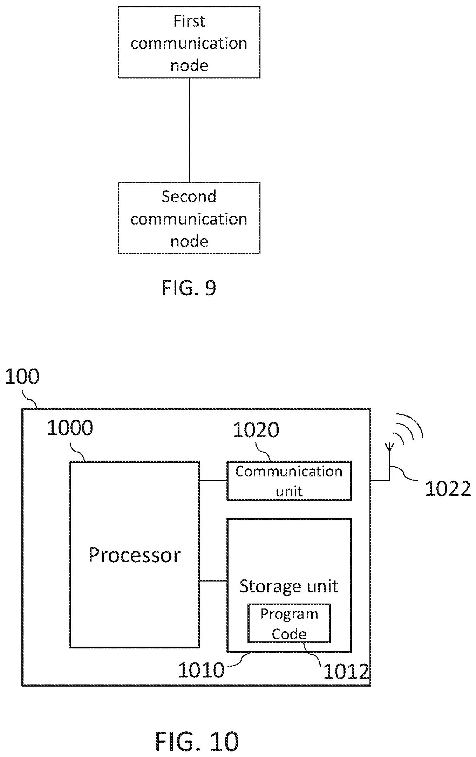

FIG. 9 shows a schematic diagram of a network architecture according to an embodiment of the present disclosure. The network (architecture) shown in FIG. 1 comprises a first communication node and a second communication node. The first communication node may be a UE, a wireless terminal, a wireless device, etc. The second communication node may be a BS, a gNB, an eNB, a repeater, a relay and so on.

FIG. 10 relates to a schematic diagram of a wireless terminal 100 according to an embodiment of the present disclosure. The wireless terminal 100 may be a user equipment (UE), a mobile phone, a laptop, a tablet computer, an electronic book or a portable computer system and is not limited herein. The wireless terminal 100 includes a processor 1000 such as a microprocessor or Application Specific Integrated Circuit (ASIC), a storage unit 1010 and a communication unit 1020. The storage unit 1010 may be any data storage device that stores a program code 1012, which is accessed and executed by the processor 1000. Embodiments of the storage unit 1010 include but are not limited to a subscriber identity module (SIM), read-only memory (ROM), flash memory, random-access memory (RAM), hard-disk, and optical data storage device. The communication unit 1020 may a transceiver and is used to transmit and receive signals (e.g., messages or packets) according to processing results of the processor 1000. In an embodiment, the communication unit 1020 transmits and receives the signals via at least one antenna 1022 shown in FIG. 10.

In an embodiment, the storage unit 1010 and the program code 1012 may be omitted and the processor 1000 may include a storage unit with stored program code.

The processor 1000 may implement any one of the steps in exemplified embodiments on the wireless terminal 100, e.g., by executing the program code 1012.

The communication unit 1020 may be a transceiver. The communication unit 1020 may as an alternative or in addition be combining a transmitting unit and a receiving unit configured to transmit and to receive, respectively, signals to and from a wireless network node (e.g., a base station).

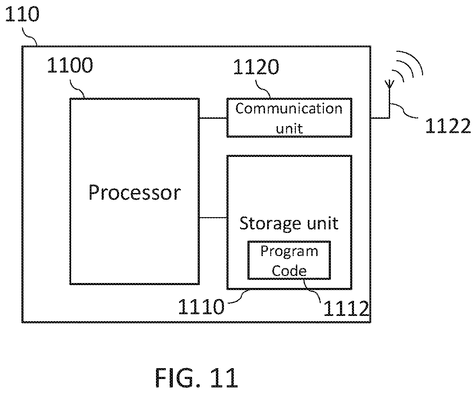

FIG. 11 relates to a schematic diagram of a wireless network node 110 according to an embodiment of the present disclosure. The wireless network node 110 may be a satellite, a base station (BS), a network entity, a Mobility Management Entity (MME), Serving Gateway (S-GW), Packet Data Network (PDN) Gateway (P-GW), a radio access network (RAN) node, a next generation RAN (NG-RAN) node, a gNB, an eNB, a gNB central unit (gNB-CU), a gNB distributed unit (gNB-DU) a data network, a core network or a Radio Network Controller (RNC), and is not limited herein. In addition, the wireless network node 110 may comprise (perform) at least one network function such as an access and mobility management function (AMF), a session management function (SMF), a user place function (UPF), a policy control function (PCF), an application function (AF), etc. The wireless network node 110 includes a processor 1100 such as a microprocessor or ASIC, a storage unit 1110 and a communication unit 1120. The storage unit 1110 may be any data storage device that stores a program code 1112, which is accessed and executed by the processor 1100. Examples of the storage unit 1110 include but are not limited to a SIM, ROM, flash memory, RAM, hard-disk, and optical data storage device. The communication unit 1120 may be a transceiver and is used to transmit and receive signals (e.g., messages or packets) according to processing results of the processor 1100. In an example, the communication unit 1120 transmits and receives the signals via at least one antenna 1122 shown in FIG. 11.

In an embodiment, the storage unit 1110 and the program code 1112 may be omitted. The processor 1100 may include a storage unit with stored program code.

The processor 1100 may implement any steps described in exemplified embodiments on the wireless network node 110, e.g., via executing the program code 1112.

The communication unit 1120 may be a transceiver. The communication unit 1120 may as an alternative or in addition be combining a transmitting unit and a receiving unit configured to transmit and to receive, respectively, signals to and from a wireless terminal (e.g., a user equipment or another wireless network node).

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according to embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of the claims. Thus, the disclosure is not intended to be limited to the implementations shown herein, but is to be accorded the widest scope consistent with the novel features and principles disclosed herein, as recited in the claims below.

## Claims

1. A wireless communication method performed by a wireless terminal (100), the method comprising:
receiving, from a wireless network node (110), a control signaling associated with a plurality of transmission occasions in a plurality of time durations,
determining a plurality of first hybrid automatic retransmission request, HARQ, process identifiers, IDs, for the plurality of transmission occasions in each time duration based on the control signaling and a first formula,
transmitting, to the wireless network node (110), a first signaling associated with the plurality of transmission occasions in a first time duration in the plurality of time durations, and
determining, based on the first signaling, a plurality of second HARQ process IDs for the plurality of transmission occasions in a second time duration;
wherein the plurality of transmission occasions are for a configured grant transmission;
wherein the plurality of time durations are periodic;
wherein the first signaling is associated with at least one unused transmission occasion which is unused for a data transmission in the first time duration;
wherein determining the plurality of first HARQ process IDs for the plurality of transmission occasions in each time duration based on the control signaling and the first formula comprises:
determining the first HARQ process ID of a 1^{st} transmission occasion in each time duration based on the first formula, and determining the first HARQ process IDs of the remaining transmission occasions in each time duration based on the first HARQ process ID of the 1^{st} transmission occasion in each time duration, or
determining the first HARQ process IDs of all the transmission occasions in each time duration based on the first formula;
wherein the first HARQ process IDs of the remaining transmission occasions in each time duration are determined to be the same with the first HARQ process ID of the 1^{st} transmission occasion in each time duration.

2. The wireless communication method of claim 1, wherein a length of time duration includes at least one of: a number of symbols, a number of slots, a number of milliseconds or one or more periodicities for a configured grant;
or, wherein the first signaling includes at least one of: a dedicated uplink control information signaling, or a configured grant uplink control information signaling;
or, wherein the first signaling comprises information associated with the first HARQ process ID of at least one unused transmission occasion which is unused for a data transmission in the first time duration;
or, wherein the first signaling is transmitted in one or more transmission occasions in the first time duration;
or, wherein a physical uplink shared channel scheduled by a downlink control information, DCI, signaling overlaps with one or more transmission occasions for transmitting the first signaling in the first time duration in at least one of time domain or frequency domain, and
wherein the first signaling is transmitted in the physical uplink shared channel;
or, wherein the first time duration and the second time duration are consecutive time durations.

3. The wireless communication method of any of claims 1 to 2,
wherein the remaining transmission occasions are not overlapped with a physical uplink shared channel scheduled by a DCI signaling.

4. The wireless communication method of any of claims 1 to 3, wherein the first formula is associated with at least one of:
time location information of a starting symbol of the transmission occasion,
periodicity information determined by the control signaling,
a number of the first HARQ process IDs, or
offset information for the first HARQ process IDs in each time duration;
preferably, wherein the first formula is associated with the time location information, the periodicity information, and the number of the first HARQ process IDs, and
wherein the periodicity information is determined by at least one of: the length of the time duration, or a quotient of dividing the length of time duration by the number of transmission occasions in one time duration;
or, wherein the first formula is associated with the time location information, the periodicity information, the number of the first HARQ process IDs, and the offset information,
wherein the offset information is determined based on a number of transmission occasions in single time duration or based on the number of the first HARQ process IDs; preferably, wherein the offset information is a set of integer values ranging from 0 to the number of transmission occasions minus 1, or
wherein the offset information is a set of integer values ranging from 0 to the number of the first HARQ process IDs minus 1.

5. The wireless communication method of any of claims 1 to 4, wherein determining, based on the first signaling, the plurality of second HARQ process IDs for the plurality of transmission occasions in the second time duration comprises:
performing, based on the first signaling, a cyclic shift on the first HARQ process IDs for the plurality of transmission occasions in the first time duration to determine the second HARQ process IDs for the plurality of transmission occasions in the second time duration.

6. The wireless communication method of any of claims 1 to 5, wherein determining, based on the first signaling, the plurality of second HARQ process IDs for the plurality of transmission occasions in the second time duration comprises:
determining the second HARQ process ID of a 1^{st} transmission occasion in the second time duration based on a HARQ process ID group determined by the first signaling, and
determining the second HARQ process IDs of the remaining transmission occasions in the second time duration based on the second HARQ process ID of the 1^{st} transmission occasion in the second time duration.

7. The wireless communication method of claim 6, wherein the second HARQ process ID of the 1^{st} transmission occasion in the second time duration is determined from a predefined HARQ process ID associated with the HARQ process ID group;
preferably, wherein the predefined HARQ process ID is a largest HARQ process ID, a smallest HARQ process ID, a random HARQ process ID, a 1-st HARQ process ID or a HARQ process ID following the last HARQ process ID in the HARQ process ID group; or, wherein the second HARQ process ID of the 1^{st} transmission occasion in the second time duration is determined by adding, to the predefined HARQ process ID, an offset of the HARQ process ID, and wherein the offset of the HARQ process ID is determined by an RRC signaling.

8. The wireless communication method of any of claims 6 to 7, wherein the second HARQ process IDs of the remaining transmission occasions in the second time duration are the same with the second HARQ process ID of the 1^{st} transmission occasion in the second time duration;
or, wherein the second HARQ process IDs of the remaining transmission occasions in the second time duration are HARQ process IDs in an increasing order starting from the second HARQ process ID of the 1^{st} transmission occasion in the second time duration; preferably, wherein the remaining transmission occasions are not overlapped with a physical uplink shared channel scheduled by a DCI signaling;
or, wherein the HARQ process ID group determined by the first signaling comprises at least one of: at least one first HARQ process ID of at least one unused transmission occasion which is unused for a data transmission in the first time duration, at least one second HARQ process ID of at least one unused transmission occasion which is unused for a data transmission in the second time duration, at least one first HARQ process ID of at least one used transmission occasion which is used for a data transmission in the first time duration, or at least one second HARQ process ID of at least one used transmission occasion which is used for a data transmission in the second time duration.

9. The wireless communication method of any of claims 1 to 5, wherein determining, based on the first signaling, the plurality of second HARQ process IDs for the plurality of transmission occasions in the second time duration comprises:
determining the second HARQ process IDs of first K transmission occasions in the second time duration from a HARQ process ID group determined by the first signaling, wherein K is a positive integer, and
determining the second HARQ process IDs of the remaining transmission occasions in the second time duration based on the second HARQ process IDs of the first K transmission occasions in the second time duration.

10. The wireless communication method of claim 9, wherein K is the number of HARQ process IDs in the HARQ process ID group determined by the first signaling; preferably, wherein the second HARQ process IDs of the first K transmission occasions in the second time duration are the HARQ process IDs in the HARQ process ID group;
or, wherein the second HARQ process IDs of the remaining transmission occasions in the second time duration are the same with a predefined HARQ process ID determined based on the second HARQ process IDs of the first K transmission occasions in the second time duration; preferably, wherein the predefined HARQ process ID is a largest HARQ process ID, a smallest HARQ process ID, a random HARQ process ID, a 1-st HARQ process ID, or a last HARQ process ID in the HARQ process ID group;
or, wherein the second HARQ process IDs of the remaining transmission occasions in the second time duration are HARQ process IDs in an increasing order starting from a predefined HARQ process ID determined based on the HARQ process ID group; preferably, wherein the remaining transmission occasions are not overlapped with a physical uplink shared channel scheduled by a DCI signaling.

11. The wireless communication method of any of claims 1 to 5, wherein determining, based on the first signaling, the plurality of second HARQ process IDs for the plurality of transmission occasions in the second time duration comprises:
determining, based on a HARQ process ID group determined by the first signaling and the first formula, the plurality of second HARQ process IDs for the plurality of transmission occasions in the second time duration;
preferably, wherein when the first formula is associated with offset information for the first HARQ process IDs in each time duration, the offset information is a set of integer values comprising a first offset subset and a second offset subset based on the first signaling,
wherein the first subset comprises the integer values associated with the number of transmission occasions or the first HARQ process IDs which is outside of the HARQ process ID group, and
wherein the second subset comprises integer values associated with in the first HARQ process IDs in the HARQ process ID group;
or, wherein the second HARQ process IDs for the transmission occasions in the second time duration are determined by the first formula using the second offset subset first and then by the first formula using the first offset subset, or
the second HARQ process IDs for the transmission occasions in the second time duration are determined by the first formula using the first offset subset first and then by the first formula using the second offset subset.

12. A wireless communication method performed by a wireless network node (110), the method comprising:
transmitting, to a wireless terminal (100), a control signaling associated with a plurality of transmission occasions in a plurality of time durations,
determining a plurality of first hybrid automatic retransmission request, HARQ, process identifiers, IDs, for the plurality of transmission occasions in each time duration based on the control signaling and a first formula,
receiving, from the wireless terminal (100), a first signaling associated with the plurality of transmission occasions in a first time duration in the plurality of time durations, and
determining, based on the first signaling, a plurality of second HARQ process IDs for the plurality of transmission occasions in a second time duration;
wherein the plurality of transmission occasions are for a configured grant transmission;
wherein the plurality of time durations are periodic;
wherein the first signaling is associated with at least one unused transmission occasion which is unused for a data transmission in the first time duration;
wherein determining the plurality of first HARQ process IDs for the plurality of transmission occasions in each time duration based on the control signaling and the first formula comprises:
determining the first HARQ process ID of a 1^{st} transmission occasion in each time duration based on the first formula, and determining the first HARQ process IDs of the remaining transmission occasions in each time duration based on the first HARQ process ID of the 1^{st} transmission occasion in each time duration, or
determining the first HARQ process IDs of all the transmission occasions in each time duration based on the first formula;
wherein the first HARQ process IDs of the remaining transmission occasions in each time duration are determined to be the same with the first HARQ process ID of the 1^{st} transmission occasion in each time duration.

13. A wireless terminal (100), comprising:
a communication unit (1020), configured to receive, from a wireless network node (110), a control signaling associated with a plurality of transmission occasions in a plurality of time durations, and a processor (1000), configured to determine a plurality of first hybrid automatic retransmission request, HARQ, process identifiers, IDs, for the plurality of transmission occasions in each time duration based on the control signaling and a first formula,
wherein the communication unit (1020)
is further configured to transmit, to the wireless network node (110), a first signaling associated with the plurality of transmission occasions in a first time duration in the plurality of time durations, and
wherein the processor (1000) is further configured to determine, based on the first signaling, a plurality of second HARQ process IDs for the plurality of transmission occasions in a second time duration;
wherein the plurality of transmission occasions are for a configured grant transmission;
wherein the plurality of time durations are periodic;
wherein the first signaling is associated with at least one unused transmission occasion which is unused for a data transmission in the first time duration;
wherein the processor (1000) is further configured to determine the first HARQ process ID of a 1^{st} transmission occasion in each time duration based on the first formula, and determine the first HARQ process IDs of the remaining transmission occasions in each time duration based on the first HARQ process ID of the 1^{st} transmission occasion in each time duration, or
determine the first HARQ process IDs of all the transmission occasions in each time duration based on the first formula;
wherein the first HARQ process IDs of the remaining transmission occasions in each time duration are determined to be the same with the first HARQ process ID of the 1^{st} transmission occasion in each time duration.

14. A wireless network node (110), comprising:
a communication unit (1120), configured to transmit, to a wireless terminal (100), a control signaling associated with a plurality of transmission occasions in a plurality of time durations, and a processor (1100), configured to determine a plurality of first hybrid automatic retransmission request, HARQ, process identifiers, IDs, for the plurality of transmission occasions in each time duration based on the control signaling and a first formula,
wherein the communication unit (1120)
is further configured to receive, from the wireless terminal (100), a first signaling associated with the plurality of transmission occasions in a first time duration in the plurality of time durations, and
wherein the processor (1100) is further configured to determine, based on the first signaling, a plurality of second HARQ process IDs for the plurality of transmission occasions in a second time duration;
wherein the plurality of transmission occasions are for a configured grant transmission;
wherein the plurality of time durations are periodic;
wherein the first signaling is associated with at least one unused transmission occasion which is unused for a data transmission in the first time duration;
wherein the processor (1100) is further configured to determine the first HARQ process ID of a 1^{st} transmission occasion in each time duration based on the first formula, and determine the first HARQ process IDs of the remaining transmission occasions in each time duration based on the first HARQ process ID of the 1^{st} transmission occasion in each time duration, or
determine the first HARQ process IDs of all the transmission occasions in each time duration based on the first formula;
wherein the first HARQ process IDs of the remaining transmission occasions in each time duration are determined to be the same with the first HARQ process ID of the 1^{st} transmission occasion in each time duration.

15. A computer program product comprising a computer-readable program medium code stored thereupon, the code, when executed by a processor, causing the processor to implement a wireless communication method recited in any one of claims 1 to 12.

## Patentansprüche

1. Drahtloskommunikationsverfahren, das von einem drahtlosen Endgerät (100) durchgeführt wird, wobei das Verfahren Folgendes umfasst:
Empfangen einer Steuersignalisierung, die einer Vielzahl von Übertragungsgelegenheiten in einer Vielzahl von Zeitdauern zugeordnet ist, von einem Drahtlosnetzwerkknoten (110),
Bestimmen einer Vielzahl von ersten Prozesskennungen, IDs, der hybriden automatischen Wiederholungsanforderung, HARQ, für die Vielzahl von Übertragungsgelegenheiten in jeder Zeitdauer basierend auf der Steuersignalisierung und einer ersten Formel,
Übertragen einer ersten Signalisierung, die der Vielzahl von Übertragungsgelegenheiten in einer ersten Zeitdauer der Vielzahl von Zeitdauern zugeordnet ist, an den Drahtlosnetzwerkknoten (110), und
Bestimmen einer Vielzahl von zweiten HARQ-Prozess-IDs für die Vielzahl von Übertragungsgelegenheiten in einer zweiten Zeitdauer basierend auf der ersten Signalisierung;
wobei die Vielzahl von Übertragungsgelegenheiten für eine Übertragung mit konfigurierter Zuweisung vorgesehen ist;
wobei die Vielzahl von Zeitdauern periodisch ist;
wobei die erste Signalisierung mindestens einer ungenutzten Übertragungsgelegenheit zugeordnet ist, die für eine Datenübertragung in der ersten Zeitdauer ungenutzt ist;
wobei das Bestimmen der Vielzahl von ersten HARQ-Prozess-IDs für die Vielzahl von Übertragungsgelegenheiten in jeder Zeitdauer basierend auf der Steuersignalisierung und der ersten Formel Folgendes umfasst:
Bestimmen der ersten HARQ-Prozess-ID einer 1. Übertragungsgelegenheit in jeder Zeitdauer basierend auf der ersten Formel und Bestimmen der ersten HARQ-Prozess-IDs der verbleibenden Übertragungsgelegenheiten in jeder Zeitdauer basierend auf der ersten HARQ-Prozess-ID der 1. Übertragungsgelegenheit in jeder Zeitdauer, oder
Bestimmen der ersten HARQ-Prozess-IDs aller Übertragungsgelegenheiten in jeder Zeitdauer basierend auf der ersten Formel;
wobei die ersten HARQ-Prozess-IDs der verbleibenden Übertragungsgelegenheiten in jeder Zeitdauer so bestimmt werden, dass sie gleich der ersten HARQ-Prozess-ID der 1. Übertragungsgelegenheit in jeder Zeitdauer sind.

2. Drahtloskommunikationsverfahren nach Anspruch 1, wobei eine Länge einer Zeitdauer mindestens eines von Folgendem umfasst: eine Anzahl von Symbolen, eine Anzahl von Zeitschlitzen, eine Anzahl von Millisekunden oder eine oder mehrere Periodizitäten für eine konfigurierte Zuweisung;
oder wobei die erste Signalisierung mindestens eines von Folgendem umfasst: eine dedizierte Uplink-Steuerinformationssignalisierung oder eine Uplink-Steuerinformationssignalisierung mit konfigurierter Zuweisung;
oder wobei die erste Signalisierung Informationen umfasst, die der ersten HARQ-Prozess-ID mindestens einer ungenutzten Übertragungsgelegenheit zugeordnet sind, die für eine Datenübertragung in der ersten Zeitdauer ungenutzt ist;
oder wobei die erste Signalisierung in einer oder mehreren Übertragungsgelegenheiten in der ersten Zeitdauer übertragen wird;
oder wobei sich ein physikalischer gemeinsam genutzter Uplink-Kanal, der durch eine Downlink-Steuerinformations-, DCI-, Signalisierung geplant wird, mit einer oder mehreren Übertragungsgelegenheiten zum Übertragen der ersten Signalisierung in der ersten Zeitdauer in mindestens einem von Zeitbereich oder Frequenzbereich überlappt, und
wobei die erste Signalisierung in dem physikalischen gemeinsam genutzten Uplink-Kanal übertragen wird;
oder wobei die erste Zeitdauer und die zweite Zeitdauer aufeinanderfolgende Zeitdauern sind.

3. Drahtloskommunikationsverfahren nach einem der Ansprüche 1 bis 2, wobei sich die verbleibenden Übertragungsgelegenheiten nicht mit einem physikalischen gemeinsam genutzten Uplink-Kanal überlappen, der durch eine DCI-Signalisierung geplant wird.

4. Drahtloskommunikationsverfahren nach einem der Ansprüche 1 bis 3, wobei die erste Formel mindestens einem von Folgendem zugeordnet ist:
Zeitpositionsinformationen eines Startsymbols der Übertragungsgelegenheit,
Periodizitätsinformationen, die durch die Steuersignalisierung bestimmt werden,
einer Anzahl der ersten HARQ-Prozess-IDs oder
Versatzinformationen für die ersten HARQ-Prozess-IDs in jeder Zeitdauer;
vorzugsweise wobei die erste Formel den Zeitpositionsinformationen, den Periodizitätsinformationen und der Anzahl der ersten HARQ-Prozess-IDs zugeordnet ist, und
wobei die Periodizitätsinformationen durch mindestens eines von Folgendem bestimmt werden: die Länge der Zeitdauer oder einen Quotienten aus der Division der Länge der Zeitdauer durch die Anzahl der Übertragungsgelegenheiten in einer Zeitdauer;
oder wobei die erste Formel den Zeitpositionsinformationen, den Periodizitätsinformationen, der Anzahl der ersten HARQ-Prozess-IDs und den Versatzinformationen zugeordnet ist,
wobei die Versatzinformationen basierend auf einer Anzahl von Übertragungsgelegenheiten in einer einzelnen Zeitdauer oder basierend auf der Anzahl der ersten HARQ-Prozess-IDs bestimmt werden; vorzugsweise wobei die Versatzinformationen eine Menge ganzzahliger Werte im Bereich von 0 bis zur Anzahl der Übertragungsgelegenheiten minus 1 sind, oder
wobei die Versatzinformationen eine Menge ganzzahliger Werte im Bereich von 0 bis zur Anzahl der ersten HARQ-Prozess-IDs minus 1 sind.

5. Drahtloskommunikationsverfahren nach einem der Ansprüche 1 bis 4, wobei das Bestimmen der Vielzahl von zweiten HARQ-Prozess-IDs für die Vielzahl von Übertragungsgelegenheiten in der zweiten Zeitdauer basierend auf der ersten Signalisierung Folgendes umfasst:
Durchführen einer zyklischen Verschiebung der ersten HARQ-Prozess-IDs für die Vielzahl von Übertragungsgelegenheiten in der ersten Zeitdauer basierend auf der ersten Signalisierung, um die zweiten HARQ-Prozess-IDs für die Vielzahl von Übertragungsgelegenheiten in der zweiten Zeitdauer zu bestimmen.

6. Drahtloskommunikationsverfahren nach einem der Ansprüche 1 bis 5, wobei das Bestimmen der Vielzahl von zweiten HARQ-Prozess-IDs für die Vielzahl von Übertragungsgelegenheiten in der zweiten Zeitdauer basierend auf der ersten Signalisierung Folgendes umfasst:
Bestimmen der zweiten HARQ-Prozess-ID einer 1. Übertragungsgelegenheit in der zweiten Zeitdauer basierend auf einer durch die erste Signalisierung bestimmten HARQ-Prozess-ID-Gruppe und
Bestimmen der zweiten HARQ-Prozess-IDs der verbleibenden Übertragungsgelegenheiten in der zweiten Zeitdauer basierend auf der zweiten HARQ-Prozess-ID der 1. Übertragungsgelegenheit in der zweiten Zeitdauer.

7. Drahtloskommunikationsverfahren nach Anspruch 6, wobei die zweite HARQ-Prozess-ID der 1. Übertragungsgelegenheit in der zweiten Zeitdauer aus einer vordefinierten HARQ-Prozess-ID bestimmt wird, die der HARQ-Prozess-ID-Gruppe zugeordnet ist;
vorzugsweise wobei die vordefinierte HARQ-Prozess-ID eine größte HARQ-Prozess-ID, eine kleinste HARQ-Prozess-ID, eine zufällige HARQ-Prozess-ID, eine 1. HARQ-Prozess-ID oder eine HARQ-Prozess-ID ist, die auf die letzte HARQ-Prozess-ID in der HARQ-Prozess-ID-Gruppe folgt; oder wobei die zweite HARQ-Prozess-ID der 1. Übertragungsgelegenheit in der zweiten Zeitdauer bestimmt wird, indem zu der vordefinierten HARQ-Prozess-ID ein Versatz der HARQ-Prozess-ID addiert wird, und wobei der Versatz der HARQ-Prozess-ID durch eine RRC-Signalisierung bestimmt wird.

8. Drahtloskommunikationsverfahren nach einem der Ansprüche 6 bis 7, wobei die zweiten HARQ-Prozess-IDs der verbleibenden Übertragungsgelegenheiten in der zweiten Zeitdauer gleich der zweiten HARQ-Prozess-ID der 1. Übertragungsgelegenheit in der zweiten Zeitdauer sind;
oder wobei die zweiten HARQ-Prozess-IDs der verbleibenden Übertragungsgelegenheiten in der zweiten Zeitdauer HARQ-Prozess-IDs in aufsteigender Reihenfolge sind, beginnend mit der zweiten HARQ-Prozess-ID der 1. Übertragungsgelegenheit in der zweiten Zeitdauer; vorzugsweise wobei sich die verbleibenden Übertragungsgelegenheiten nicht mit einem physikalischen gemeinsam genutzten Uplink-Kanal überlappen, der durch eine DCI-Signalisierung geplant wird;
oder wobei die durch die erste Signalisierung bestimmte HARQ-Prozess-ID-Gruppe mindestens eines von Folgendem umfasst:
mindestens eine erste HARQ-Prozess-ID mindestens einer ungenutzten Übertragungsgelegenheit, die für eine Datenübertragung in der ersten Zeitdauer ungenutzt ist, mindestens eine zweite HARQ-Prozess-ID mindestens einer ungenutzten Übertragungsgelegenheit, die für eine Datenübertragung in der zweiten Zeitdauer ungenutzt ist, mindestens eine erste HARQ-Prozess-ID mindestens einer genutzten Übertragungsgelegenheit, die für eine Datenübertragung in der ersten Zeitdauer genutzt wird, oder mindestens eine zweite HARQ-Prozess-ID mindestens einer genutzten Übertragungsgelegenheit, die für eine Datenübertragung in der zweiten Zeitdauer genutzt wird.

9. Drahtloskommunikationsverfahren nach einem der Ansprüche 1 bis 5, wobei das Bestimmen der Vielzahl von zweiten HARQ-Prozess-IDs für die Vielzahl von Übertragungsgelegenheiten in der zweiten Zeitdauer basierend auf der ersten Signalisierung Folgendes umfasst:
Bestimmen der zweiten HARQ-Prozess-IDs der ersten K Übertragungsgelegenheiten in der zweiten Zeitdauer aus einer durch die erste Signalisierung bestimmten HARQ-Prozess-ID-Gruppe, wobei K eine positive ganze Zahl ist, und
Bestimmen der zweiten HARQ-Prozess-IDs der verbleibenden Übertragungsgelegenheiten in der zweiten Zeitdauer basierend auf den zweiten HARQ-Prozess-IDs der ersten K Übertragungsgelegenheiten in der zweiten Zeitdauer.

10. Drahtloskommunikationsverfahren nach Anspruch 9, wobei K die Anzahl der HARQ-Prozess-IDs in der durch die erste Signalisierung bestimmten HARQ-Prozess-ID-Gruppe ist; vorzugsweise wobei die zweiten HARQ-Prozess-IDs der ersten K Übertragungsgelegenheiten in der zweiten Zeitdauer die HARQ-Prozess-IDs in der HARQ-Prozess-ID-Gruppe sind;
oder wobei die zweiten HARQ-Prozess-IDs der verbleibenden Übertragungsgelegenheiten in der zweiten Zeitdauer gleich einer vordefinierten HARQ-Prozess-ID sind, die basierend auf den zweiten HARQ-Prozess-IDs der ersten K Übertragungsgelegenheiten in der zweiten Zeitdauer bestimmt wird; vorzugsweise wobei die vordefinierte HARQ-Prozess-ID eine größte HARQ-Prozess-ID, eine kleinste HARQ-Prozess-ID, eine zufällige HARQ-Prozess-ID, eine 1. HARQ-Prozess-ID oder eine letzte HARQ-Prozess-ID in der HARQ-Prozess-ID-Gruppe ist;
oder wobei die zweiten HARQ-Prozess-IDs der verbleibenden Übertragungsgelegenheiten in der zweiten Zeitdauer HARQ-Prozess-IDs in aufsteigender Reihenfolge sind, beginnend mit einer vordefinierten HARQ-Prozess-ID, die basierend auf der HARQ-Prozess-ID-Gruppe bestimmt wird; vorzugsweise wobei sich die verbleibenden Übertragungsgelegenheiten nicht mit einem physikalischen gemeinsam genutzten Uplink-Kanal überlappen, der durch eine DCI-Signalisierung geplant wird.

11. Drahtloskommunikationsverfahren nach einem der Ansprüche 1 bis 5, wobei das Bestimmen der Vielzahl von zweiten HARQ-Prozess-IDs für die Vielzahl von Übertragungsgelegenheiten in der zweiten Zeitdauer basierend auf der ersten Signalisierung Folgendes umfasst:
Bestimmen der Vielzahl von zweiten HARQ-Prozess-IDs für die Vielzahl von Übertragungsgelegenheiten in der zweiten Zeitdauer basierend auf einer durch die erste Signalisierung bestimmten HARQ-Prozess-ID-Gruppe und der ersten Formel;
vorzugsweise wobei, wenn die erste Formel Versatzinformationen für die ersten HARQ-Prozess-IDs in jeder Zeitdauer zugeordnet ist, die Versatzinformationen eine Menge ganzzahliger Werte sind, die eine erste Versatzteilmenge und eine zweite Versatzteilmenge basierend auf der ersten Signalisierung umfasst,
wobei die erste Teilmenge die ganzzahligen Werte umfasst, die der Anzahl von Übertragungsgelegenheiten oder den ersten HARQ-Prozess-IDs zugeordnet sind, die außerhalb der HARQ-Prozess-ID-Gruppe liegen, und
wobei die zweite Teilmenge ganzzahlige Werte umfasst, die den ersten HARQ-Prozess-IDs in der HARQ-Prozess-ID-Gruppe zugeordnet sind;
oder wobei die zweiten HARQ-Prozess-IDs für die Übertragungsgelegenheiten in der zweiten Zeitdauer zuerst durch die erste Formel unter Verwendung der zweiten Versatzteilmenge und anschließend durch die erste Formel unter Verwendung der ersten Versatzteilmenge bestimmt werden, oder
die zweiten HARQ-Prozess-IDs für die Übertragungsgelegenheiten in der zweiten Zeitdauer zuerst durch die erste Formel unter Verwendung der ersten Versatzteilmenge und anschließend durch die erste Formel unter Verwendung der zweiten Versatzteilmenge bestimmt werden.

12. Drahtloskommunikationsverfahren, das von einem Drahtlosnetzwerkknoten (110) durchgeführt wird, wobei das Verfahren Folgendes umfasst:
Übertragen einer Steuersignalisierung, die einer Vielzahl von Übertragungsgelegenheiten in einer Vielzahl von Zeitdauern zugeordnet ist, an ein drahtloses Endgerät (100),
Bestimmen einer Vielzahl von ersten Prozesskennungen, IDs, der hybriden automatischen Wiederholungsanforderung, HARQ, für die Vielzahl von Übertragungsgelegenheiten in jeder Zeitdauer basierend auf der Steuersignalisierung und einer ersten Formel,
Empfangen einer ersten Signalisierung, die der Vielzahl von Übertragungsgelegenheiten in einer ersten Zeitdauer der Vielzahl von Zeitdauern zugeordnet ist, von dem drahtlosen Endgerät (100), und
Bestimmen einer Vielzahl von zweiten HARQ-Prozess-IDs für die Vielzahl von Übertragungsgelegenheiten in einer zweiten Zeitdauer basierend auf der ersten Signalisierung;
wobei die Vielzahl von Übertragungsgelegenheiten für eine Übertragung mit konfigurierter Zuweisung vorgesehen ist;
wobei die Vielzahl von Zeitdauern periodisch ist;
wobei die erste Signalisierung mindestens einer ungenutzten Übertragungsgelegenheit zugeordnet ist, die für eine Datenübertragung in der ersten Zeitdauer ungenutzt ist;
wobei das Bestimmen der Vielzahl von ersten HARQ-Prozess-IDs für die Vielzahl von Übertragungsgelegenheiten in jeder Zeitdauer basierend auf der Steuersignalisierung und der ersten Formel Folgendes umfasst:
Bestimmen der ersten HARQ-Prozess-ID einer 1. Übertragungsgelegenheit in jeder Zeitdauer basierend auf der ersten Formel und Bestimmen der ersten HARQ-Prozess-IDs der verbleibenden Übertragungsgelegenheiten in jeder Zeitdauer basierend auf der ersten HARQ-Prozess-ID der 1. Übertragungsgelegenheit in jeder Zeitdauer, oder
Bestimmen der ersten HARQ-Prozess-IDs aller Übertragungsgelegenheiten in jeder Zeitdauer basierend auf der ersten Formel;
wobei die ersten HARQ-Prozess-IDs der verbleibenden Übertragungsgelegenheiten in jeder Zeitdauer so bestimmt werden, dass sie gleich der ersten HARQ-Prozess-ID der 1. Übertragungsgelegenheit in jeder Zeitdauer sind.

13. Drahtloses Endgerät (100), umfassend:
eine Kommunikationseinheit (1020), die dazu konfiguriert ist, von einem Drahtlosnetzwerkknoten (110) eine Steuersignalisierung zu empfangen, die einer Vielzahl von Übertragungsgelegenheiten in einer Vielzahl von Zeitdauern zugeordnet ist, und
einen Prozessor (1000), der dazu konfiguriert ist, einer Vielzahl von ersten Prozesskennungen, IDs, der hybriden automatischen Wiederholungsanforderung, HARQ, für die Vielzahl von Übertragungsgelegenheiten in jeder Zeitdauer basierend auf der Steuersignalisierung und einer ersten Formel zu bestimmen,
wobei die Kommunikationseinheit (1020) ferner dazu konfiguriert ist, an den Drahtlosnetzwerkknoten (110) eine erste Signalisierung zu übertragen, die der Vielzahl von Übertragungsgelegenheiten in einer ersten Zeitdauer der Vielzahl von Zeitdauern zugeordnet ist, und
wobei der Prozessor (1000) ferner dazu konfiguriert ist, basierend auf der ersten Signalisierung eine Vielzahl von zweiten HARQ-Prozess-IDs für die Vielzahl von Übertragungsgelegenheiten in einer zweiten Zeitdauer zu bestimmen;
wobei die Vielzahl von Übertragungsgelegenheiten für eine Übertragung mit konfigurierter Zuweisung vorgesehen ist;
wobei die Vielzahl von Zeitdauern periodisch ist;
wobei die erste Signalisierung mindestens einer ungenutzten Übertragungsgelegenheit zugeordnet ist, die für eine Datenübertragung in der ersten Zeitdauer ungenutzt ist;
wobei der Prozessor (1000) ferner dazu konfiguriert ist, die erste HARQ-Prozess-ID einer 1. Übertragungsgelegenheit in jeder Zeitdauer basierend auf der ersten Formel zu bestimmen und die ersten HARQ-Prozess-IDs der verbleibenden Übertragungsgelegenheiten in jeder Zeitdauer basierend auf der ersten HARQ-Prozess-ID der 1. Übertragungsgelegenheit in jeder Zeitdauer zu bestimmen, oder
die ersten HARQ-Prozess-IDs aller Übertragungsgelegenheiten in jeder Zeitdauer basierend auf der ersten Formel zu bestimmen;
wobei die ersten HARQ-Prozess-IDs der verbleibenden Übertragungsgelegenheiten in jeder Zeitdauer so bestimmt werden, dass sie gleich der ersten HARQ-Prozess-ID der 1. Übertragungsgelegenheit in jeder Zeitdauer sind.

14. Drahtlosnetzwerkknoten (110), umfassend:
eine Kommunikationseinheit (1120), die dazu konfiguriert ist, an ein drahtloses Endgerät (100) eine Steuersignalisierung zu übertragen, die einer Vielzahl von Übertragungsgelegenheiten in einer Vielzahl von Zeitdauern zugeordnet ist, und
einen Prozessor (1100), der dazu konfiguriert ist, einer Vielzahl von ersten Prozesskennungen, IDs, der hybriden automatischen Wiederholungsanforderung, HARQ, für die Vielzahl von Übertragungsgelegenheiten in jeder Zeitdauer basierend auf der Steuersignalisierung und einer ersten Formel zu bestimmen,
wobei die Kommunikationseinheit (1120) ferner dazu konfiguriert ist, von dem drahtlosen Endgerät (100) eine erste Signalisierung zu empfangen, die der Vielzahl von Übertragungsgelegenheiten in einer ersten Zeitdauer der Vielzahl von Zeitdauern zugeordnet ist, und
wobei der Prozessor (1100) ferner dazu konfiguriert ist, basierend auf der ersten Signalisierung eine Vielzahl von zweiten HARQ-Prozess-IDs für die Vielzahl von Übertragungsgelegenheiten in einer zweiten Zeitdauer zu bestimmen;
wobei die Vielzahl von Übertragungsgelegenheiten für eine Übertragung mit konfigurierter Zuweisung vorgesehen ist;
wobei die Vielzahl von Zeitdauern periodisch ist;
wobei die erste Signalisierung mindestens einer ungenutzten Übertragungsgelegenheit zugeordnet ist, die für eine Datenübertragung in der ersten Zeitdauer ungenutzt ist;
wobei der Prozessor (1100) ferner dazu konfiguriert ist, die erste HARQ-Prozess-ID einer 1. Übertragungsgelegenheit in jeder Zeitdauer basierend auf der ersten Formel zu bestimmen und die ersten HARQ-Prozess-IDs der verbleibenden Übertragungsgelegenheiten in jeder Zeitdauer basierend auf der ersten HARQ-Prozess-ID der 1. Übertragungsgelegenheit in jeder Zeitdauer zu bestimmen, oder
die ersten HARQ-Prozess-IDs aller Übertragungsgelegenheiten in jeder Zeitdauer basierend auf der ersten Formel zu bestimmen;
wobei die ersten HARQ-Prozess-IDs der verbleibenden Übertragungsgelegenheiten in jeder Zeitdauer so bestimmt werden, dass sie gleich der ersten HARQ-Prozess-ID der 1. Übertragungsgelegenheit in jeder Zeitdauer sind.

15. Computerprogrammprodukt, umfassend einen darauf gespeicherten computerlesbaren Programmmediumcode, wobei der Code bei Ausführung durch einen Prozessor den Prozessor veranlasst, ein Drahtloskommunikationsverfahren nach einem der Ansprüche 1 bis 12 zu implementieren.

## Revendications

1. Procédé de communication sans fil exécuté par un terminal sans fil (100), le procédé comprenant :
la réception, depuis un nœud de réseau sans fil (110), d'une signalisation de commande associée à une pluralité d'occasions de transmission dans une pluralité de durées temporelles,
la détermination d'une pluralité de premiers identifiants, ID, de processus de demande de retransmission automatique hybride, HARQ, pour la pluralité d'occasions de transmission dans chaque durée temporelle sur la base de la signalisation de commande et d'une première formule,
la transmission, au nœud de réseau sans fil (110),
d'une première signalisation associée à la pluralité d'occasions de transmission dans une première durée temporelle parmi la pluralité de durées temporelles, et
la détermination, sur la base de la première signalisation, d'une pluralité de seconds ID de processus HARQ pour la pluralité d'occasions de transmission dans une seconde durée temporelle ;
dans lequel la pluralité d'occasions de transmission sont destinées à une transmission à octroi configuré ;
dans lequel la pluralité de durées temporelles sont périodiques ;
dans lequel la première signalisation est associée à au moins une occasion de transmission inutilisée qui est inutilisée pour une transmission de données dans la première durée temporelle ;
dans lequel la détermination de la pluralité de premiers ID de processus HARQ pour la pluralité d'occasions de transmission dans chaque durée temporelle sur la base de la signalisation de commande et de la première formule comprend :
la détermination du premier ID de processus HARQ d'une 1re occasion de transmission dans chaque durée temporelle sur la base de la première formule, et la détermination des premiers ID de processus HARQ des occasions de transmission restantes dans chaque durée temporelle sur la base du premier ID de processus HARQ de la 1re occasion de transmission dans chaque durée temporelle, ou
la détermination des premiers ID de processus HARQ de toutes les occasions de transmission dans chaque durée temporelle sur la base de la première formule ;
dans lequel les premiers ID de processus HARQ des occasions de transmission restantes dans chaque durée temporelle sont déterminés comme étant identiques au premier ID de processus HARQ de la 1re occasion de transmission dans chaque durée temporelle.

2. Procédé de communication sans fil selon la revendication 1, dans lequel une longueur de durée temporelle comprend au moins l'un parmi : un nombre de symboles, un nombre de créneaux, un nombre de millisecondes ou une ou plusieurs périodicités pour un octroi configuré ;
ou, dans lequel la première signalisation comprend au moins l'une parmi : une signalisation d'informations de commande de liaison montante dédiée, ou une signalisation d'informations de commande de liaison montante à octroi configuré ;
ou, dans lequel la première signalisation comprend des informations associées au premier ID de processus HARQ d'au moins une occasion de transmission inutilisée qui est inutilisée pour une transmission de données dans la première durée temporelle ;
ou, dans lequel la première signalisation est transmise dans une ou plusieurs occasions de transmission dans la première durée temporelle ;
ou, dans lequel un canal physique partagé de liaison montante planifié par une signalisation d'informations de commande de liaison descendante, DCI, chevauche une ou plusieurs occasions de transmission pour transmettre la première signalisation dans la première durée temporelle dans au moins l'un du domaine temporel ou du domaine fréquentiel, et
dans lequel la première signalisation est transmise dans le canal physique partagé de liaison montante ;
ou, dans lequel la première durée temporelle et la seconde durée temporelle sont des durées temporelles consécutives.

3. Procédé de communication sans fil selon l'une quelconque des revendications 1 à 2, dans lequel les occasions de transmission restantes ne se chevauchent pas avec un canal physique partagé de liaison montante planifié par une signalisation DCI.

4. Procédé de communication sans fil selon l'une quelconque des revendications 1 à 3, dans lequel la première formule est associée à au moins l'une parmi :
des informations de position temporelle d'un symbole de début de l'occasion de transmission,
des informations de périodicité déterminées par la signalisation de commande,
un nombre des premiers ID de processus HARQ, ou
des informations de décalage pour les premiers ID de processus HARQ dans chaque durée temporelle ;
de préférence, dans lequel la première formule est associée aux informations de position temporelle, aux informations de périodicité et au nombre des premiers ID de processus HARQ, et
dans lequel les informations de périodicité sont déterminées par au moins l'un parmi : la longueur de la durée temporelle, ou un quotient de la division de la longueur de la durée temporelle par le nombre d'occasions de transmission dans une durée temporelle ;
ou, dans lequel la première formule est associée aux informations de position temporelle, aux informations de périodicité, au nombre des premiers ID de processus HARQ et aux informations de décalage,
dans lequel les informations de décalage sont déterminées sur la base d'un nombre d'occasions de transmission dans une seule durée temporelle ou sur la base du nombre des premiers ID de processus HARQ ; de préférence, dans lequel les informations de décalage sont un ensemble de valeurs entières allant de 0 au nombre d'occasions de transmission moins 1, ou
dans lequel les informations de décalage sont un ensemble de valeurs entières allant de 0 au nombre des premiers ID de processus HARQ moins 1.

5. Le procédé de communication sans fil selon l'une quelconque des revendications 1 à 4, dans lequel la détermination, sur la base de la première signalisation, de la pluralité de seconds ID de processus HARQ pour la pluralité d'occasions de transmission dans la seconde durée temporelle comprend :
l'exécution, sur la base de la première signalisation, d'un décalage cyclique sur les premiers ID de processus HARQ pour la pluralité d'occasions de transmission dans la première durée temporelle afin de déterminer les seconds ID de processus HARQ pour la pluralité d'occasions de transmission dans la seconde durée temporelle.

6. Le procédé de communication sans fil selon l'une quelconque des revendications 1 à 5, dans lequel la détermination, sur la base de la première signalisation, de la pluralité de seconds ID de processus HARQ pour la pluralité d'occasions de transmission dans la seconde durée temporelle comprend :
la détermination du second ID de processus HARQ d'une 1re occasion de transmission dans la seconde durée temporelle sur la base d'un groupe d'ID de processus HARQ déterminé par la première signalisation, et
la détermination des seconds ID de processus HARQ des occasions de transmission restantes dans la seconde durée temporelle sur la base du second ID de processus HARQ de la 1re occasion de transmission dans la seconde durée temporelle.

7. Procédé de communication sans fil selon la revendication 6, dans lequel le second ID de processus HARQ de la 1re occasion de transmission dans la seconde durée temporelle est déterminé à partir d'un ID de processus HARQ prédéfini associé au groupe d'ID de processus HARQ ;
de préférence, dans lequel l'ID de processus HARQ prédéfini est un plus grand ID de processus HARQ, un plus petit ID de processus HARQ, un ID de processus HARQ aléatoire, un 1er ID de processus HARQ ou un ID de processus HARQ suivant le dernier ID de processus HARQ dans le groupe d'ID de processus HARQ ; ou, dans lequel le second ID de processus HARQ de la 1re occasion de transmission dans la seconde durée temporelle est déterminé en ajoutant, à l'ID de processus HARQ prédéfini, un décalage de l'ID de processus HARQ, et dans lequel le décalage de l'ID de processus HARQ est déterminé par une signalisation RRC.

8. Procédé de communication sans fil selon l'une quelconque des revendications 6 à 7, dans lequel les seconds ID de processus HARQ des occasions de transmission restantes dans la seconde durée temporelle sont identiques au second ID de processus HARQ de la 1re occasion de transmission dans la seconde durée temporelle ;
ou, dans lequel les seconds ID de processus HARQ des occasions de transmission restantes dans la seconde durée temporelle sont des ID de processus HARQ dans un ordre croissant à partir du second ID de processus HARQ de la 1re occasion de transmission dans la seconde durée temporelle ; de préférence, dans lequel les occasions de transmission restantes ne se chevauchent pas avec un canal physique partagé de liaison montante planifié par une signalisation DCI ;
ou, dans lequel le groupe d'ID de processus HARQ déterminé par la première signalisation comprend au moins l'un parmi :
au moins un premier ID de processus HARQ d'au moins une occasion de transmission inutilisée qui est inutilisée pour une transmission de données dans la première durée temporelle, au moins un second ID de processus HARQ d'au moins une occasion de transmission inutilisée qui est inutilisée pour une transmission de données dans la seconde durée temporelle, au moins un premier ID de processus HARQ d'au moins une occasion de transmission utilisée qui est utilisée pour une transmission de données dans la première durée temporelle, ou au moins un second ID de processus HARQ d'au moins une occasion de transmission utilisée qui est utilisée pour une transmission de données dans la seconde durée temporelle.

9. Procédé de communication sans fil selon l'une quelconque des revendications 1 à 5, dans lequel la détermination, sur la base de la première signalisation, de la pluralité de seconds ID de processus HARQ pour la pluralité d'occasions de transmission dans la seconde durée temporelle comprend :
la détermination des seconds ID de processus HARQ des K premières occasions de transmission dans la seconde durée temporelle à partir d'un groupe d'ID de processus HARQ déterminé par la première signalisation, dans lequel K est un entier positif, et
la détermination des seconds ID de processus HARQ des occasions de transmission restantes dans la seconde durée temporelle sur la base des seconds ID de processus HARQ des K premières occasions de transmission dans la seconde durée temporelle.

10. Procédé de communication sans fil selon la revendication 9, dans lequel K est le nombre d'ID de processus HARQ dans le groupe d'ID de processus HARQ déterminé par la première signalisation ; de préférence, dans lequel les seconds ID de processus HARQ des K premières occasions de transmission dans la seconde durée temporelle sont les ID de processus HARQ dans le groupe d'ID de processus HARQ ;
ou, dans lequel les seconds ID de processus HARQ des occasions de transmission restantes dans la seconde durée temporelle sont identiques à un ID de processus HARQ prédéfini déterminé sur la base des seconds ID de processus HARQ des K premières occasions de transmission dans la seconde durée temporelle ;
de préférence, dans lequel l'ID de processus HARQ prédéfini est un plus grand ID de processus HARQ, un plus petit ID de processus HARQ, un ID de processus HARQ aléatoire, un 1er ID de processus HARQ, ou un dernier ID de processus HARQ dans le groupe d'ID de processus HARQ ;
ou, dans lequel les seconds ID de processus HARQ des occasions de transmission restantes dans la seconde durée temporelle sont des ID de processus HARQ dans un ordre croissant à partir d'un ID de processus HARQ prédéfini déterminé sur la base du groupe d'ID de processus HARQ ; de préférence, dans lequel les occasions de transmission restantes ne se chevauchent pas avec un canal physique partagé de liaison montante planifié par une signalisation DCI.

11. Procédé de communication sans fil selon l'une quelconque des revendications 1 à 5, dans lequel la détermination, sur la base de la première signalisation, de la pluralité de seconds ID de processus HARQ pour la pluralité d'occasions de transmission dans la seconde durée temporelle comprend :
la détermination, sur la base d'un groupe d'ID de processus HARQ déterminé par la première signalisation et de la première formule, de la pluralité de seconds ID de processus HARQ pour la pluralité d'occasions de transmission dans la seconde durée temporelle ;
de préférence, dans lequel, lorsque la première formule est associée à des informations de décalage pour les premiers ID de processus HARQ dans chaque durée temporelle, les informations de décalage sont un ensemble de valeurs entières comprenant un premier sous-ensemble de décalage et un second sous-ensemble de décalage sur la base de la première signalisation,
dans lequel le premier sous-ensemble comprend les valeurs entières associées au nombre d'occasions de transmission ou aux premiers ID de processus HARQ qui sont en dehors du groupe d'ID de processus HARQ, et
dans lequel le second sous-ensemble comprend des valeurs entières associées aux premiers ID de processus HARQ dans le groupe d'ID de processus HARQ ;
ou, dans lequel les seconds ID de processus HARQ pour les occasions de transmission dans la seconde durée temporelle sont déterminés par la première formule en utilisant d'abord le second sous-ensemble de décalage puis par la première formule en utilisant le premier sous-ensemble de décalage, ou
les seconds ID de processus HARQ pour les occasions de transmission dans la seconde durée temporelle sont déterminés par la première formule en utilisant d'abord le premier sous-ensemble de décalage puis par la première formule en utilisant le second sous-ensemble de décalage.

12. Procédé de communication sans fil exécuté par un nœud de réseau sans fil (110), le procédé comprenant :
la transmission, à un terminal sans fil (100),
d'une signalisation de commande associée à une pluralité d'occasions de transmission dans une pluralité de durées temporelles,
la détermination d'une pluralité de premiers identifiants, ID, de processus de demande de retransmission automatique hybride, HARQ, pour la pluralité d'occasions de transmission dans chaque durée temporelle sur la base de la signalisation de commande et d'une première formule,
la réception, depuis le terminal sans fil (100), d'une première signalisation associée à la pluralité d'occasions de transmission dans une première durée temporelle parmi la pluralité de durées temporelles, et
la détermination, sur la base de la première signalisation, d'une pluralité de seconds ID de processus HARQ pour la pluralité d'occasions de transmission dans une seconde durée temporelle ;
dans lequel la pluralité d'occasions de transmission sont destinées à une transmission à octroi configuré ;
dans lequel la pluralité de durées temporelles sont périodiques ;
dans lequel la première signalisation est associée à au moins une occasion de transmission inutilisée qui est inutilisée pour une transmission de données dans la première durée temporelle ;
dans lequel la détermination de la pluralité de premiers ID de processus HARQ pour la pluralité d'occasions de transmission dans chaque durée temporelle sur la base de la signalisation de commande et de la première formule comprend :
la détermination du premier ID de processus HARQ d'une 1re occasion de transmission dans chaque durée temporelle sur la base de la première formule, et la détermination des premiers ID de processus HARQ des occasions de transmission restantes dans chaque durée temporelle sur la base du premier ID de processus HARQ de la 1re occasion de transmission dans chaque durée temporelle, ou
la détermination des premiers ID de processus HARQ de toutes les occasions de transmission dans chaque durée temporelle sur la base de la première formule ;
dans lequel les premiers ID de processus HARQ des occasions de transmission restantes dans chaque durée temporelle sont déterminés comme étant identiques au premier ID de processus HARQ de la 1re occasion de transmission dans chaque durée temporelle.

13. Terminal sans fil (100), comprenant :
une unité de communication (1020), configurée pour recevoir, depuis un nœud de réseau sans fil (110), une signalisation de commande associée à une pluralité d'occasions de transmission dans une pluralité de durées temporelles, et
un processeur (1000), configuré pour déterminer une pluralité de premiers identifiants, ID, de processus de demande de retransmission automatique hybride, HARQ, pour la pluralité d'occasions de transmission dans chaque durée temporelle sur la base de la signalisation de commande et d'une première formule,
dans lequel l'unité de communication (1020) est en outre configurée pour transmettre, au nœud de réseau sans fil (110), une première signalisation associée à la pluralité d'occasions de transmission dans une première durée temporelle parmi la pluralité de durées temporelles, et
dans lequel le processeur (1000) est en outre configuré pour déterminer, sur la base de la première signalisation, une pluralité de seconds ID de processus HARQ pour la pluralité d'occasions de transmission dans une seconde durée temporelle ;
dans lequel la pluralité d'occasions de transmission sont destinées à une transmission à octroi configuré ;
dans lequel la pluralité de durées temporelles sont périodiques ;
dans lequel la première signalisation est associée à au moins une occasion de transmission inutilisée qui est inutilisée pour une transmission de données dans la première durée temporelle ;
dans lequel le processeur (1000) est en outre configuré pour déterminer le premier ID de processus HARQ d'une 1re occasion de transmission dans chaque durée temporelle sur la base de la première formule, et déterminer les premiers ID de processus HARQ des occasions de transmission restantes dans chaque durée temporelle sur la base du premier ID de processus HARQ de la 1re occasion de transmission dans chaque durée temporelle,
ou
déterminer les premiers ID de processus HARQ de toutes les occasions de transmission dans chaque durée temporelle sur la base de la première formule ;
dans lequel les premiers ID de processus HARQ des occasions de transmission restantes dans chaque durée temporelle sont déterminés comme étant identiques au premier ID de processus HARQ de la 1re occasion de transmission dans chaque durée temporelle.

14. Nœud de réseau sans fil (110), comprenant :
une unité de communication (1120), configurée pour transmettre, à un terminal sans fil (100), une signalisation de commande associée à une pluralité d'occasions de transmission dans une pluralité de durées temporelles, et
un processeur (1100),
configuré pour déterminer une pluralité de premiers identifiants, ID, de processus de demande de retransmission automatique hybride, HARQ, pour la pluralité d'occasions de transmission dans chaque durée temporelle sur la base de la signalisation de commande et d'une première formule,
dans lequel l'unité de communication (1120) est en outre configurée pour recevoir, depuis le terminal sans fil (100), une première signalisation associée à la pluralité d'occasions de transmission dans une première durée temporelle parmi la pluralité de durées temporelles, et
dans lequel le processeur (1100) est en outre configuré pour déterminer, sur la base de la première signalisation, une pluralité de seconds ID de processus HARQ pour la pluralité d'occasions de transmission dans une seconde durée temporelle ;
dans lequel la pluralité d'occasions de transmission sont destinées à une transmission à octroi configuré ;
dans lequel la pluralité de durées temporelles sont périodiques ;
dans lequel la première signalisation est associée à au moins une occasion de transmission inutilisée qui est inutilisée pour une transmission de données dans la première durée temporelle ;
dans lequel le processeur (1100) est en outre configuré pour déterminer le premier ID de processus HARQ d'une 1re occasion de transmission dans chaque durée temporelle sur la base de la première formule, et déterminer les premiers ID de processus HARQ des occasions de transmission restantes dans chaque durée temporelle sur la base du premier ID de processus HARQ de la 1re occasion de transmission dans chaque durée temporelle,
ou
déterminer les premiers ID de processus HARQ de toutes les occasions de transmission dans chaque durée temporelle sur la base de la première formule ;
dans lequel les premiers ID de processus HARQ des occasions de transmission restantes dans chaque durée temporelle sont déterminés comme étant identiques au premier ID de processus HARQ de la 1re occasion de transmission dans chaque durée temporelle.

15. Produit de programme informatique comprenant un code de support de programme lisible par ordinateur stocké sur celui-ci, le code, lorsqu'il est exécuté par un processeur, amenant le processeur à mettre en œuvre un procédé de communication sans fil énoncé dans l'une quelconque des revendications 1 à 12.
